# EUROPÄISCHE PATENTSCHRIFT

(11) **EP 3 268 544 B1**
(45) Veröffentlichungstag und Bekanntmachung des Hinweises auf die Patenterteilung: **15.01.2020**
(21) Anmeldenummer: 16708941.6
(22) Anmeldetag: 09.03.2016
(51) Int. Cl.: F16K 11/044, F16K 11/00, F16K 11/10, F16K 15/02, E03C 1/04

(54) **SANITÄRES UMSCHALTVENTIL SOWIE BAUGRUPPE MIT EINEM SOLCHEN UMSCHALTVENTIL**
SANITARY CHANGE-OVER VALVE AND ASSEMBLY COMPRISING A CHANGE-OVER VALVE OF THIS TYPE
SOUPAPE D'INVERSION SANITAIRE AINSI QUE MODULE POURVU D'UNE TELLE SOUPAPE D'INVERSION

(30) Priorität: 09.03.2015 DE 202015001758 U
(43) Veröffentlichungstag der Anmeldung: 17.01.2018
(73) Patentinhaber: Neoperl GmbH, 79379 Müllheim (DE)
(72) Erfinder: MEYER, Burkhard, 79312 Emmendingen (DE)
(74) Vertreter: Börjes-Pestalozza, Henrich
(86) Internationale Anmeldenummer: PCT/EP2016/000416
(87) Internationale Veröffentlichungsnummer: WO 2016/142060

(56) Entgegenhaltungen:
- EP-A1- 0 583 599
- EP-B1- 1 664 957
- WO-A1-86/03272
- DE-A1- 4 039 280
- US-A1- 2010 012 197
- US-A1- 2012 031 514
- US-A1- 2012 103 436
- US-A1- 2012 152 387
- US-B1- 6 557 587

## Beschreibung

Die Erfindung betrifft ein sanitäres Umschaltventil mit einem Ventilgehäuse, das einen Ventileinlass und zwei wahlweise ansteuerbare Ventilauslässe hat, mit einem Ventilkolben, der von einer ersten Umstellposition, in der das Fluid über einen, durch einen ersten Ventilauslass führenden Strömungsweg geführt ist, in eine zweite Umstellposition, in der das Fluid durch einen über einen zweiten Ventilauslass führenden Strömungsweg geführt ist, bewegbar ist, sobald der vom Umschaltventil weiterführende Abschnitt des zweiten Strömungsweges freigegeben wurde, wobei der Ventilkolben als Hohlkörper ausgebildet ist, durch den das Fluid durch wenigstens einen am Kolbenumfang angeordneten Kolbeneinlass im Verlaufe zumindest eines der Strömungswege geführt ist, wobei das durch den wenigstens einen Kolbeneinlass geführte Fluid im Verlaufe des zweiten Strömungsweges durch einen, an der dem Kolbenboden abgewandten Kolbenstirnseite vorgesehenen ersten Kolbenauslass geführt ist.

Die vorliegende Erfindung befasst sich auch mit einer sanitären Baugruppe mit einem Umschaltventil der eingangs erwähnten Art.

Aus der US 2012/152387 A ist ein automatischer Wasserverteiler vorbekannt, der zur Verwendung in einer Duscharmatur vorgesehen ist, um das ausfließende Wasser mittels Wasserdruck zu verteilen, so dass das Wasser aus der Duscharmatur oder einer Dusche sprüht. Um beim Umschalten des Wassersprühtyps einen eventuell stoßweisen und mit einer unerwünschten Geräuschbildung verbundenen Wasserschlag-Effekt zu vermeiden und um auch bei niedrigeren Drücken eine gute Wasserverteilung zu erreichen, ist in einem Gehäuse eine Kammer vorgesehen, die an ihrem oberen Ende mit einem ersten Auslasskanal, an ihrem unteren Ende mit einem zweiten Auslasskanal und an der Seite mit zumindest einem Einlasskanal verbunden ist. Der vorbekannte Wasserverteiler weist ein Ventilelement mit einem Ventilkern auf, der einen Kolbenabschnitt und einen Wellenabschnitt hat, welcher sich von dem Kolbenabschnitt nach oben erstreckt. Der Kolbenabschnitt des Ventilkerns bewegt sich vertikal entlang der Kammer, wobei ein oberes Ende des Wellenabschnitts über ein Loch, das zwischen der Kammer und dem ersten Auslasskanal vorgesehen ist, in den ersten Auslasskanal eingreift. Der erste Auslasskanal weist eine Tülle zum Sprühen von Wasser nach unten auf, wobei am oberen Ende des Wellenabschnitts des Ventilkerns ein Verteilungsstopfen vorgesehen ist, der sich vertikal mit dem Ventilkern bewegt, um in einer oberen Position das Loch zu öffnen und in einer unteren Position das Loch zu schließen. In der Kammer des Ventilelements ist eine Puffervorrichtung vorgesehen, die eine zweite Passage enthält, welche mit der Tülle und dem zweiten Auslasskanal in Verbindung steht. Die Puffervorrichtung weist eine Stopfenwand auf, die an einem Sprühpfad der Tülle angeordnet ist, wobei die Stopfenwand von der Tülle einen Abstand einhält, so dass das von der Tülle versprühte Wasser nach Umspülen der Stopfenwand eine Berieselungsreaktion auf den Ventilkern ausübt, so dass eine Abwärtsbewegung des Ventilkerns zu einem Verschiebemoment verringert wird. Sobald die Stopfenwand der Puffervorrichtung durch versprühtes Wasser aus der Tülle umspült wird, wird eine Strömungsreaktion erzeugt und auf den Ventilkern ausgeübt, so dass nach einer Bewässerungsfunktion der Wasserhahn auf eine Sprühfunktion des Sprühduschkopfes umgeschaltet wird und ein Aufprall zwischen dem Verteilungsstopfen des Ventilkerns und dem Loch der Basis unter Vermeidung eines unerwünschten Wasserschlag-Effekts verringert wird.

Aus der US 6,557,587 B1 ist bereits ein Umschaltventil vorbekannt, das einen Hauptkörper mit einem Gleitschlitz hat, in dem eine Schaltstange verschiebbar angeordnet ist. Die Schaltstange ist mit zwei inneren Unterlegscheiben und zwei äußeren Unterlegscheiben versehen, um sicherzustellen, dass die Schaltstange und der Gleitschlitz dicht sind. Der Hauptkörper steht über dem Gleitschlitz mit einer Wasserentladungszelle in Verbindung. Diese Wasserentladungszelle ist mit einem Wasserführungselement versehen, das etwa mittig ein Wasserauslassloch hat, um ein möglichst gleichmäßiges Ausfließen des Wassers zu begünstigen.

Aus der EP 1 664 957 B1 ist bereits ein Umschaltventil der eingangs erwähnten Art vorbekannt, das beispielsweise in die zu einer wand- oder deckenseitig montierten Kopfbrause führende Wasserleitung montiert werden kann, um das Wasser wahlweise bei Bedarf über das Umschaltventil auch zu einer gegebenenfalls auch nachträglich noch angeschlossenen Handbrause zu führen. Das vorbekannte Umschaltventil weist dazu ein Ventilgehäuse mit einem Ventileinlass und zwei wahlweise ansteuerbaren Ventilauslässen auf, von denen ein erster Ventilauslass über einen ersten Strömungsweg beispielsweise zur Kopfbrause geführt sein kann, während ein zweiter Ventilauslass über einen zweiten Strömungsweg etwa der Handbrause zugeordnet ist. Dabei ist im Ventilgehäuse ein Ventilkolben verschieblich geführt, der von der ersten Umstellposition in die zweite Umstellposition und zurück in Abhängigkeit davon bewegbar ist, ob der vom Umschaltventil weiterführende Abschnitt des zweiten Strömungsweges geschlossen oder freigegeben wurde. Dieser Ventilkörper ist als Hohlkörper ausgebildet, durch den das Fluid durch wenigstens einen am Kolbenumfang angeordneten Kolbeneinlass im Verlaufe zumindest eines der Strömungswege geführt ist. In Fig. 3 der EP 1 664 957 B1 ist erkennbar, dass das durch den wenigstens einen Kolbeneinlass geführte Fluid durch wenigstens einen, an der dem Kolbenboden abgewandten Kolbenstirnseite vorgesehenen ersten Kolbenauslass geführt sein kann. Das aus EP 1 664 957 B1 vorbekannte Umschaltventil lässt sich jedoch nicht an die unterschiedlichen Anforderungen verschiedener Anwendungen, insbesondere auch im Niederdruckbereich, anpassen. Darüber hinaus ist das vorbekannte Umschaltventil vergleichsweise komplex aufgebaut und erfordert einen entsprechenden Platzbedarf.

Es besteht daher insbesondere die Aufgabe, ein möglichst einfach und platzsparend aufgebautes Umschaltventil der eingangs erwähnten Art zu schaffen, das sich durch seine vielseitige Anwendbarkeit auszeichnet. Darüber hinaus besteht auch die Aufgabe, eine Baugruppe der oben genannten Art mit einem solchen Umschaltventil zu schaffen, die diese Zielsetzungen ebenfalls erfüllt.

Bei dem sanitären Umschaltventil der eingangs erwähnten Art besteht die erfindungsgemäße Lösung insbesondere darin, dass im Kolbenauslass eine Durchflussdrossel, ein Durchflussmengenregler oder ein Rückflussverhinderer vorgesehen ist.

Das erfindungsgemäße sanitäre Umschaltventil weist ein Ventilgehäuse auf, das einen Ventileinlass und zwei wahlweise ansteuerbare Ventilauslässe hat. In dem Ventilgehäuse ist ein Ventilkolben verschieblich geführt, der zwischen einer ersten und einer zweiten Umstellposition bewegbar ist. Während in der ersten Umstellposition das Fluid über einen, durch einen ersten Ventilauslass führenden Strömungsweg geführt ist, wird das Fluid in der zweiten Umstellposition durch einen, über einen zweiten Fluidauslass führenden Strömungsweg gelenkt, sobald der vom Umschaltventil weiterführende Abschnitt des zweiten Strömungsweges freigegeben und dazu beispielsweise ein an einer Handbrause vorgesehenes Schließ- oder Regelventil geöffnet wurde. Dabei ist der im Ventilgehäuse verschieblich geführte Ventilkörper als Hohlkörper ausgebildet, durch den das Fluid über wenigstens einen, am Kolbenumfang angeordneten Kolbeneinlass im Verlauf zumindest eines der Strömungswege geführt ist. Um das Umschaltventil auf einfache Weise nun an eine bestimmte Anwendung anpassen zu können, ist das durch den wenigstens einen Kolbeneinlass geführte Fluid im Verlaufe des zweiten Strömungsweges durch einen, an der dem Kolbenboden abgewandten Kolbenstirnseite vorgesehenen ersten Kolbenauslass geführt. Erfindungsgemäß ist dabei in diesem ersten Kolbenauslass eine den Durchflussquerschnitt reduzierende Durchflussdrossel, ein das pro Zeiteinheit durchströmende Durchflussvolumen auf einen druckunabhängigen festgelegten Durchflusswert einregelnder Durchflussmengenregler oder auch ein den Strömungsweg nur in eine Richtung freigebender Rückflussverhinderer vorgesehen, wobei je nach der gewünschten Anwendung zwischen zumindest einem dieser sanitären Zubehörteile ausgewählt werden kann. Da dabei der Hohlkörper-Innenraum des Ventilkolbens zum Einbau des zumindest einen sanitären Zubehörteiles verwendet wird, zeichnet sich das erfindungsgemäße Umschaltventil durch seine einfache, kompakte und platzsparende Bauweise aus. Der modulare Aufbau des erfindungsgemäßen sanitären Umschaltventiles erlaubt es, beispielsweise durch Auswahl des entsprechenden Durchflussmengenreglers oder der entsprechenden Durchflussdrossel die Durchflussleistung oder den Durchfluss an die Anforderungen der entsprechenden Applikation anzupassen. Dabei lassen sich durch ein gegebenenfalls auch bereits herstellerseitiges Auswechseln der vorgesehenen Durchflussmengenregler oder der Durchflussdrosseln die festgelegten Durchflussleistungen oder Widerstände bei Bedarf mit geringem Aufwand verändern.

Um auf handelsübliche sanitäre Zubehörteile zurückgreifen zu können und um entsprechend der vorgesehenen Anwendung eines der vielen angebotenen Zubehörteile im erfindungsgemäßen Umschaltventil einsetzen zu können, ist es vorteilhaft, wenn die Durchflussdrossel, der Durchflussmengenregler oder der Rückflussverhinderer als Einsetzpatrone ausgebildet ist, und wenn im Hohlkörper-Innenraum des Ventilkolbens eine Patronenaufnahme vorgesehen ist, deren Einsetzöffnung an der dem Kolbenboden abgewandten Kolbenstirnseite des Ventilkolbens angeordnet ist. Ist die Durchflussdrossel, der Durchflussmengenregler, der Rückflussverhinderer oder die Kombination von zumindest zwei solcher Zubehörteile als Einsetzpatrone ausgebildet, wird die kompakte und platzsparende Bauweise des erfindungsgemäßen Umschaltventils und einer unter Verwendung des erfindungsgemäßen Umschaltventils zusammengestellten Baugruppe begünstigt.

Damit das Umschaltventil beim Öffnen oder Schließen des beispielsweise zu einer Handbrause führenden zweiten Strömungsweges allein durch die damit verbundene Druckänderung im Umschaltventil sich von der einen Umstellposition in die andere Umstellposition und zurück bewegen kann, ist es vorteilhaft, wenn der Ventilkolben an seiner dem Kolbenboden abgewandten Kolbenstirnseite einen im Vergleich zum Kolbenboden größeren Außenumfang hat. Auf diese Weise ist der beim Schließen des zweiten Strömungsweges auf den Ventilkolben einwirkende Rückstaudruck auf jeden Fall größer als der seitens des ersten Strömungsweges einwirkende Fluiddruck und der erste Strömungsweg bleibt mit Sicherheit offen. Die sich infolge der verschiedenen Außendurchmesser des Ventilkolbens ergebenden Flächenunterschiede bewirken am Kolben durch den anstehenden Druck und die Durchströmung unterschiedliche Kräfte, welche das Hin- und Herschalten zwischen den beiden Modi ermöglichen. Im Verlaufe des zweiten Strömungsweges wird beispielsweise die resultierende Kraft an der Kolbenfläche durch die Durchströmung des Mengenreglers für die gleichzeitige Abdichtung des ersten Strömungsweges benötigt.

Eine weitere vorteilhafte Ausführungsform gemäß der Erfindung sieht vor, dass der Ventilkolben an seinem dem Kolbenboden abgewandten Stirnendbereich außenumfangsseitig wenigstens einen ersten Dichtring aufweist, der als umlaufende Lippendichtung ausgebildet ist, welche Lippendichtung mindestens eine Dichtlippe hat, die derart schräg zum Schiebeweg des Ventilkolbens angeordnet ist, dass das freie Lippenende der mindestens einen Dichtlippe in die dem Kolbenboden abgewandte Richtung weist. Um nämlich die Funktion des Umschaltventiles auch im Niederdruckbereich, etwa ab 0,2 bar, sicherzustellen, muss der Ventilkolben während des zweiten Strömungsweges gegenüber dem Ventilgehäuse abgedichtet werden. Dabei hat die Verwendung eines als Lippendichtung ausgebildeten ersten Dichtringes den Vorteil, dass sich die Dichtlippe dieser Lippendichtung entsprechend dem anstehenden Fluiddruck verformen kann. Wird dabei die Dichtlippe derart schräg zum Schiebeweg des Ventilkolbens angeordnet, dass das freie Lippenende der mindestens einen Dichtlippe in die dem Kolbenboden abgewandte Richtung weist, und wird diese Lippendichtung also, entgegen dem Stand der Technik, umgekehrt montiert, kann sich die Dichtlippe bei hohem Druck einklappen. Dieser Effekt dient der Reibungsreduzierung, wodurch das Hin- und Herschalten zwischen dem ersten und dem zweiten Strömungsweg wesentlich verbessert wird. Ein weiterer Vorteil ist, dass bei eingeklappter Dichtlippe eine zusätzliche Wassermenge durch den zwischen Kolbenumfang des Ventilkolbens und der den Schiebeweg des Ventilkolbens umgrenzenden Gehäusewandung des Ventilgehäuses verbleibenden Ringspalt fließen kann. Bei niedrigem Druck hingegen würde dieser Ringspalt ohne die vorhandene Lippendichtung zu viel Wasser am Ventilkolben vorbeifließen lassen. Diese Wassermenge würde aber beim Durchströmen des Durchflussmengenreglers oder der Durchflussdrossel fehlen, wodurch nicht genügend Kraft für die Abdichtung des ersten Strömungsweges erzeugt werden könnte.

Ein weiterer Vorschlag gemäß der Erfindung sieht demgegenüber vor, dass der Ventilkolben an seinem dem Kolbenboden abgewandten Stirnendbereich außenumfangsseitig einen als O-Ring ausgestalteten ersten Dichtring hat, der unter dem Druck des in der zweiten Umstellposition anströmenden Fluids derart verformbar ist, dass er den Ringspalt zwischen dem Außenumfang des Ventilkolbens und dem Innenumfang des Ventilgehäuses abdichtet. Da bei dieser weiterbildenden Ausführungsform der erste Dichtring als O-Ring ausgebildet ist und erst nach Erreichen der zweiten Umstellposition beziehungsweise auf dem Weg dahin den Ventilkolben abdichtet, ergibt sich eine wesentlich geringere Reibung im Vergleich zu einem ersten Dichtring, der den Ventilkolben permanent zum Ventilgehäuse hin abdichtet. Durch die dargestellte Abdichtung des Kolbens in der zweiten Umstellposition fließt das gesamte Wasser durch den als Hohlkörper ausgebildeten Ventilkolben sowie beispielsweise einen im Ventilkolben vorgesehenen Durchflussmengenregler, wodurch sich eine optimierte Regelkurve eines solchen Durchflussmengenreglers ergibt.

Vorteilhaft ist es, wenn der Ventilkolben an seinem dem Kolbenboden zugewandten Stirnendbereich außenumfangsseitig wenigstens einen über den Kolbenumfang vorstehenden zweiten Dichtring hat, der in der zweiten Umstellposition an einem sich zum Ventilkolben hin verjüngenden und ringförmig umlaufenden Gehäuseinnenwand-Abschnitt derart dicht anliegt, dass der erste Strömungsweg dicht verschlossen ist.

Besonders vorteilhaft ist es, wenn der sich zum Ventilkolben hin verjüngende Gehäuseinnenwand-Abschnitt von einem benachbarten zylindrischen Gehäuseinnenwand-Abschnitt durch eine Kante getrennt ist, und wenn in der zweiten Umstellposition der Ventilkolben durch den Druck des anströmenden Fluids von einer ersten Schiebestellung, in welcher der Ventilkolben mit seinem zweiten Dichtring an der Kante dichtend anliegt, in eine zweite Schiebestellung bewegbar ist, in welcher der zweite Dichtring an dem zylindrischen und vorzugsweise auch den Ventilkolben führenden Gehäuseinnenwand-Abschnitt radial dichtend anliegt. So kann der im Niederdruckbereich noch an der Kante anliegende zweite Dichtring axial beziehungsweise radial abdichten, um bei höherem Wasserdruck, wenn dieser zweite Dichtring in den zylindrischen Gehäuseinnenwand-Abschnitt vorgeschoben wurde, radial abzudichten. Durch eine solche radiale Dichtweise wird bei höheren Wasserdrücken eine höhere Dichtheit gewährleistest, während demgegenüber im Niederdruckbereich die axiale beziehungsweise radiale Abdichtung an der Kante zwischen den Gehäuseinnenwand-Abschnitten ausreichend sein kann.

Eine bevorzugte Ausführungsform gemäß der Erfindung sieht vor, dass der Ventilkolben an seinem Kolbenumfang zumindest einen zweiten Kolbenauslass hat, über den der erste Strömungsweg des Fluids geführt ist. Ist der zweite Strömungsweg verschlossen, kann das in das erfindungsgemäße Umschaltventil einströmende Wasser über den zweiten Kolbenauslass hindurch und an dem zweiten Dichtring vorbei über den ersten Strömungsweg abfließen.

Dabei sieht eine bevorzugte Ausführungsform gemäß der Erfindung vor, dass der zumindest eine zweite Kolbenauslass am Kolbenumfang des Ventilkolbens in dem zwischen dem wenigstens einen ersten Dichtring und dem zweiten Dichtring angeordneten Kolbenabschnitt vorgesehen ist.

Eine weitere vorteilhafte Ausführungsform gemäß der Erfindung sieht vor, dass der im Ventilgehäuse verschieblich geführte Ventilkolben mittels einer Verdrehsicherung verdrehgesichert geführt ist. Mit Hilfe dieser Verdrehsicherung wird sichergestellt, dass sich der Ventilkolben gegenüber dem Ventilgehäuse während der Schiebebewegungen nicht verdrehen kann. Auf diese Weise wird sichergestellt, dass die zuström- und abströmseitigen Gehäuseöffnungen einerseits und die im Ventilkolben vorgesehenen Fluidein- und -auslässe immer in der korrekten Ausrichtung zueinander angeordnet sind, so dass der Durchfluss nicht durch eine infolge der Verdrehung eventuell eintretende Querschnittsverengung unnötig verringert wird. Da die entsprechenden Öffnungen im Ventilgehäuse einerseits und im Ventilkolben andererseits stets in der richtigen Anordnung zueinander gehalten werden, wird auch die beim Durchströmen des Umschaltventiles eventuell entstehende Geräuschentwicklung wesentlich vermindert.

Dabei sieht eine besonders einfache und zweckmäßige Ausführungsform gemäß der Erfindung vor, dass diese Verdrehsicherung wenigstens eine am Kolbenumfang des Ventilkolbens angeordnete Sicherungsnut oder Sicherungsfeder aufweist, die mit einer zugeordneten Sicherungsfeder oder Sicherungsnut an dem dem Schiebeweg umgrenzenden Gehäuseinnenumfang des Ventilgehäuses zusammenwirkt. Dabei kann insbesondere die am Ventilkolben vorgesehene Sicherungsfeder einstückig mit dem Ventilkolben verbunden sein.

Insbesondere im Niederdruckbereich kann es vorteilhaft sein, wenn der Ventilkolben an seinem dem Kolbenboden abgewandten Stirnendbereich gegenüber dem dem Ventilkolben entlang seines Schiebeweges umgrenzenden Gehäuseinnenumfang des Ventilgehäuses mittels einer Rollmembran oder einer Membrandichtung abgedichtet ist, die einerseits am Kolbenumfang und andererseits am Gehäuseinnenumfang dicht gehalten ist. Ist der Ventilkolben gegenüber dem ersten und dem zweiten Strömungsweg mittels einer Rollmembran oder dergleichen Dichtmembrane abgedichtet, kann sich insbesondere im Niederdruckbereich eine wesentlich verbesserte Funktionsweise ergeben, da bei einer solchen Membrane deutlich weniger Reibung im Vergleich zu der dynamischen und radial dichtenden Lippendichtung auftritt.

Bei der sanitären Baugruppe der eingangs erwähnten Art besteht die erfindungsgemäße Lösung der oben gestellten Aufgabe insbesondere darin, dass das Ventilgehäuse des Umschaltventiles in ein Einsetzgehäuse eingesetzt ist, welches Einsetzgehäuse seinerseits in einem Kupplungsgehäuse angeordnet ist, welches Kupplungsgehäuse einen hülsenförmigen Gehäuseabschnitt zur Aufnahme des Einsetzgehäuses aufweist, an dem seitlich ein Leitungsanschluss für den zweiten Strömungsweg vorgesehen ist, wobei das eine Stirnende des hülsenförmigen Gehäuseabschnitts einen Gehäuseeinlass des Kupplungsgehäuses und das andere Stirnende dessen Gehäuseauslass bildet.

Dabei ist es vorteilhaft, wenn das Einsetzgehäuse von der einlassseitigen Stirnseite des Kupplungsgehäuses aus in dieses bis zu einem Einsetzanschlag einschiebbar ist.

Besonders vorteilhaft ist es, wenn das Einsetzgehäuse eine Gehäuseaufnahme für das Ventilgehäuse aufweist und wenn diese Gehäuseaufnahme des Einsetzgehäuses eine Einsetzöffnung hat, die am Gehäuseumfang des Einsetzgehäuses vorgesehen ist.

Weitere Merkmale gemäß der Erfindung ergeben sich aus den Ansprüchen in Verbindung mit der Zeichnung sowie der Figurenbeschreibung. Nachstehend wird die Erfindung anhand bevorzugter Ausführungsbeispiele noch näher beschrieben.

Es zeigt:
- Fig. 1: ein in einem Längsschnitt dargestelltes Umschaltventil, in dessen Ventilgehäuse ein Ventilkolben zwischen einer hier gezeigten ersten Umstellposition und einer zweiten Umstellposition verschieblich geführt ist,
- Fig. 2: das ebenfalls längsgeschnittene Umschaltventil aus Figur 1 in der zweiten Umstellposition seines Ventilkolbens,
- Fig. 3: das längsgeschnittene Umschaltventil aus den Figuren 1 und 2 in der bereits in Figur 2 gezeigten Umstellposition des Ventilkolbens,
- Fig. 4: den Ventilkolben in einer Detailansicht in dem in Figur 3 umgrenzten Bereich, in dem am Kolbenaußenumfang des Ventilkolbens eine Lippendichtung vorgesehen ist, die zwischen dem Ventilkolben einerseits und dem den Schiebeweg umgrenzenden Gehäuseinnenumfang des Ventilgehäuses andererseits abdichtet,
- Fig. 5: das hier nochmals längsgeschnitten dargestellte Umschaltventil aus den Figuren 1 bis 4, wobei eine Dichtlippe der Lippendichtung druckbedingt nach innen zum Ventilkolben hin verformt ist,
- Fig. 6: den Ventilkolben in einer Detailansicht in dem in Figur 5 umgrenzten Bereich, wobei die nach innen zum Ventilkolben hin verformte Dichtlippe der Lippendichtung gut zu erkennen ist,
- Fig. 7: das in den Figuren 1 bis 6 gezeigte Umschaltventil in einer Seitenansicht auf sein Ventilgehäuse,
- Fig. 8: das Umschaltventil aus den Figuren 1 bis 7 in einem Längsschnitt durch Schnittebene VIII-VIII gemäß Figur 7, wobei gut zu erkennen ist, dass der Ventilkolben mittels einer Verdrehsicherung verdrehgesichert im Ventilgehäuse geführt ist,
- Fig. 9: einen Detail-Längsschnitt in dem in Figur 8 umkreisten Bereich der Verdrehsicherung,
- Fig.10: ein mit den Figuren 1 bis 9 vergleichbares Umschaltventil, das in seinem als Hohlkörper ausgebildeten Ventilkolben einen Durchflussmengenregler aufweist,
- Fig.11: das Umschaltventil aus Figur 10, das hier aber in Anpassung an eine andere Anwendung statt des Durchflussmengenreglers nun eine Durchflussdrossel in seinem Ventilkolben aufweist,
- Fig.12: das Umschaltventil aus den Figuren 1 bis 11 in einer auseinandergezogenen Perspektivdarstellung seiner Bestandteile,
- Fig.13: ein Kupplungsgehäuse in einer perspektivischen Seitenansicht, in welches Kupplungsgehäuse ein Einsetzgehäuse eingesetzt ist, in welchem sich das Umschaltventil gemäß den Figuren 1 bis 12 befindet,
- Fig.14: das in Figur 13 gezeigte Kupplungsgehäuse mit dem zur Aufnahme des Umschaltventiles bestimmten Einsetzgehäuse in einer perspektivischen Draufsicht auf die Abströmseite,
- Fig.15: das in dem Einsetzgehäuse befindliche Umschaltventil aus den Figuren 1 bis 14 in einer perspektivischen Seitenansicht,
- Fig.16: das in dem Einsetzgehäuse befindliche Umschaltventil aus den Figuren 1 bis 15 in einer perspektivischen Draufsicht auf die Abströmseite,
- Fig.17: das Umschaltventil aus den Figuren 1 bis 16 in einer perspektivischen Draufsicht auf die eine Stirnseite seines Ventilgehäuses,
- Fig.18: das Umschaltventil aus den Figuren 1 bis 17 in einer perspektivischen Draufsicht auf die gegenüber Figur 17 andere Stirnseite des Ventilgehäuses,
- Fig.19: ein hier längsgeschnittenes Umschaltventil, das mit dem Umschaltventil gemäß den Figuren 1 bis 18 im Wesentlichen vergleichbar ist, wobei jedoch der Ventilkolben gegenüber dem den Schiebeweg umgrenzenden Gehäuseinnenumfang mittels einer Rollmembrane abgedichtet ist,
- Fig.20: das Umschaltventil aus Figur 19 in einer gegenüber Figur 19 geänderten Umstellposition seines Ventilkolbens,
- Fig.21: ein Anwendungsbeispiel für ein Umschaltventil gemäß den Figuren 1 bis 20, wobei das Umschaltventil hier zum Umschalten zwischen einer wandseitig montierten Kopfbrause einerseits und einer an einer flexiblen Schlauchleitung gehaltenen Handbrause vorgesehen ist,
- Fig.22: das in Figur 21 gezeigte Anwendungsbeispiel, wobei hier nun der zur Handbrause führende Strömungsweg geöffnet ist,
- Fig.23: ein anderes Anwendungsbeispiel für das in den Figuren 1 bis 20 gezeigte Umschaltventil, wobei das Umschaltventil hier zum Umschalten zwischen dem Wasserauslauf einer sanitären Wasserauslaufarmatur einerseits und einer Handbrause andererseits vorgesehen ist,
- Fig.24: das in Figur 23 gezeigte Anwendungsbeispiel, wobei hier nun das ausströmende Wasser über die Handbrause ausläuft,
- Fig.25: ein weiteres Anwendungsbeispiel, bei dem das Umschaltventil gemäß den Figuren 1 bis 20 zum Umschalten zwischen dem Wasserauslauf einer sanitären Auslaufarmatur einerseits und dem Wasserauslass eines Wasserfilters umschaltbar ist,
- Fig.26: das in Figur 25 gezeigte Anwendungsbeispiel, wobei hier jedoch der zum Wasserauslass des Wasserfilters führende Strömungsweg geöffnet wurde,
- Fig. 27: ein Umschaltventil in einem Längsschnitt, das an dem dem Kolbenboden zugewandten Stirnendbereich seines Ventilkolbens einen über den Kolbenumfang vorstehenden Dichtring hat, der in der hier dargestellten zweiten Umstellposition an einem sich zum Ventilkolben hin verjüngenden und ringförmig umlaufenden Gehäuseinnenwand-Abschnitt anliegt,
- Fig. 28: das Umschaltventil aus Fig. 27 in einem Detail-Längsschnitt im Bereich seines an dem sich verjüngenden Gehäuseinnenwand-Abschnitt anliegenden Dichtrings,
- Fig. 29: das Umschaltventil aus Fig. 27 und 28 in einem demgegenüber höheren Druckbereich, bei dem der Ventilkolben in einen zylindrischen und vorzugsweise den Ventilkolben führenden Gehäuseinnenwand-Abschnitt vorgeschoben wurde und nun den Ringspalt zwischen der Gehäuseinnenwand des Ventilgehäuses und dem Außenumfang des Ventilkolbens radial abdichtet,
- Fig. 30: das Umschaltventil aus den Fig. 27 bis 29 in einem Detail-Längsschnitt gemäß Fig. 29 im Bereich des am zylindrischen Gehäuseinnenwand-Abschnitt radial dichtend anliegenden Dichtringes,
- Fig. 31: ein hier längsgeschnitten dargestelltes Umschaltventil, das an dem dem Kolbenboden abgewandten Stirnendbereich seines Ventilkolbens einen als O-Ring ausgebildeten Dichtring hat, wobei das Umschaltventil hier in der ersten Umstellposition dargestellt ist,
- Fig. 32: das Umschaltventil aus Fig. 31 in einem Detail-Längsschnitt im Bereich des an dem dem Kolbenboden abgewandten Stirnendbereich außenumfangsseitig vorgesehenen Dichtringes,
- Fig. 33: das Umschaltventil aus den Fig. 31 und 32 in einer der zweiten Umstellposition angenäherten Schiebestellung seines Ventilkolbens, wobei der an dem dem Kolbenboden abgewandten Stirnendbereich des Ventilkolbens vorgesehene Dichtring hier noch unverformt ist,
- Fig. 34: das Umschaltventil aus den Fig. 31 bis 33 in einem Detail-Längsschnitt gemäß Fig. 33 im Bereich des unverformten Dichtringes,
- Fig. 35: das hier nun in seiner zweiten Umstellposition gezeigte Umschaltventil, wobei der an dem dem Kolbenboden abgewandten Stirnendbereich außenumfangsseitig vorgesehene Dichtring unter dem Druck des anströmenden Fluids derart verformt ist, dass dieser Dichtring nun den Ringspalt zwischen dem Außenumfang des Ventilkolbens einerseits und der gegenüberliegenden Gehäuseinnenwand des Ventilgehäuses andererseits radial abdichtet,
- Fig. 36: das Umschaltventil aus den Fig. 31 bis 35 in einem Detail-Längsschnitt gemäß Fig. 35 im Bereich des unter dem hohen Druck des anströmenden Fluids verformten Dichtringes,
- Fig. 37: ein im Längsschnitt dargestelltes Umschaltventil, das mittels eines Einsetzgehäuses in ein Kupplungsgehäuse eingesetzt ist, wobei der Ventilkolben des Umschaltventiles hier in axialer Richtung des anströmenden Fluids verschieblich geführt ist und wobei das Umschaltventil hier in seiner ersten Umstellposition dargestellt wurde,
- Fig. 38: das Umschaltventil aus Fig. 37 in der zweiten Umstellposition seines Ventilkolbens, und
- Fig. 39: das mit Hilfe des Einsetzgehäuses in das Kupplungsgehäuse eingesetzte Umschaltventil aus den Fig. 37 und 38 in einer auseinandergezogenen Perspektivdarstellung seiner Einzelteile.

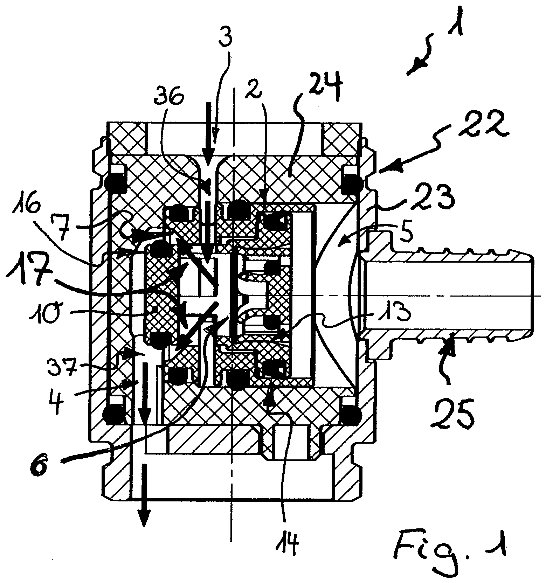

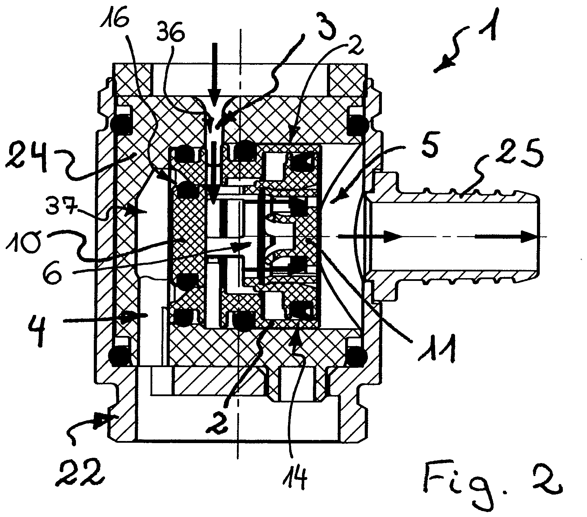

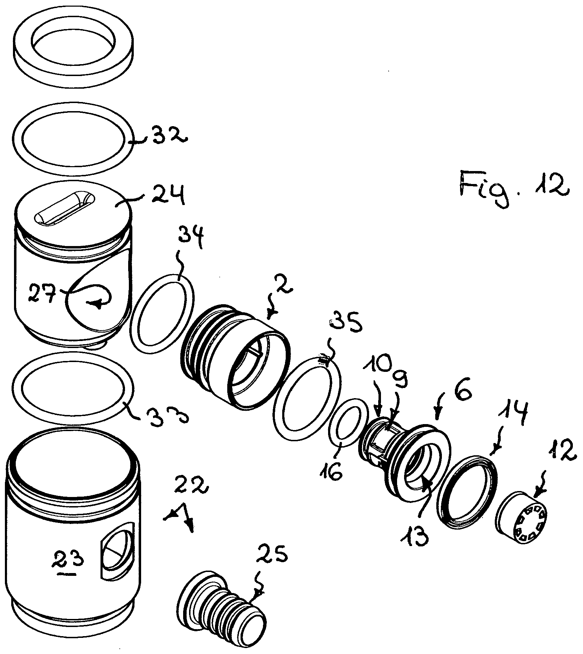

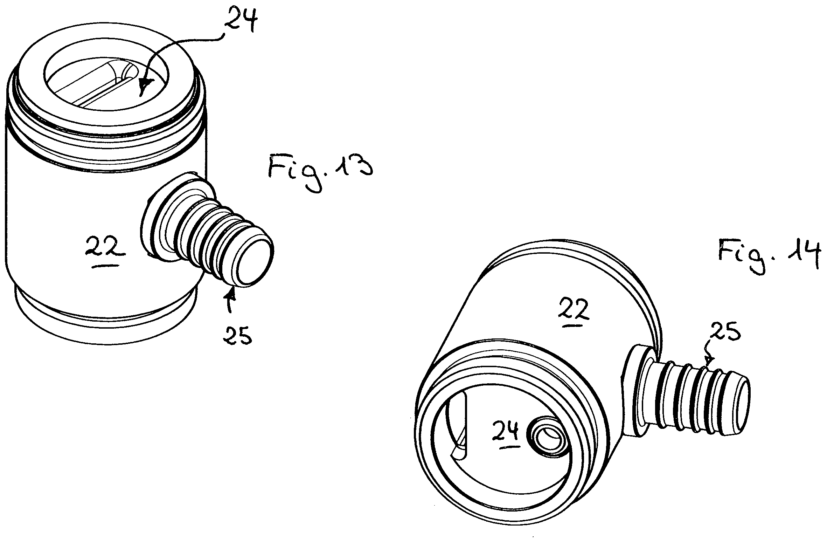

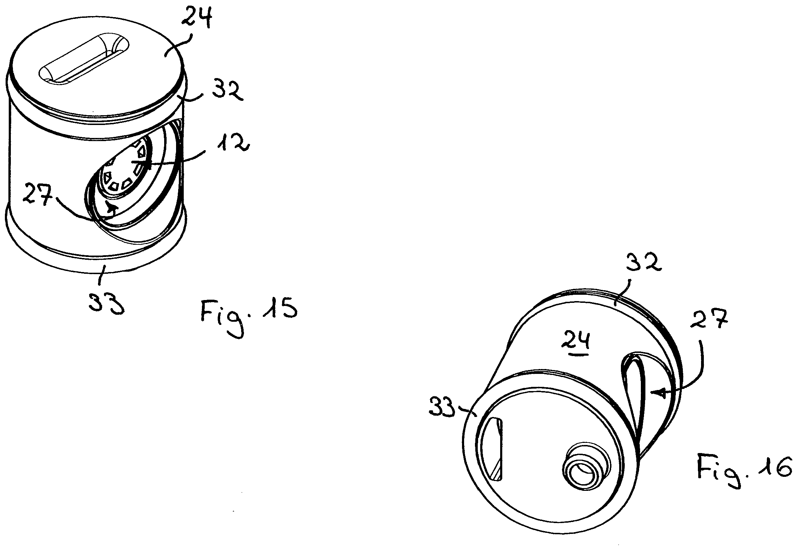

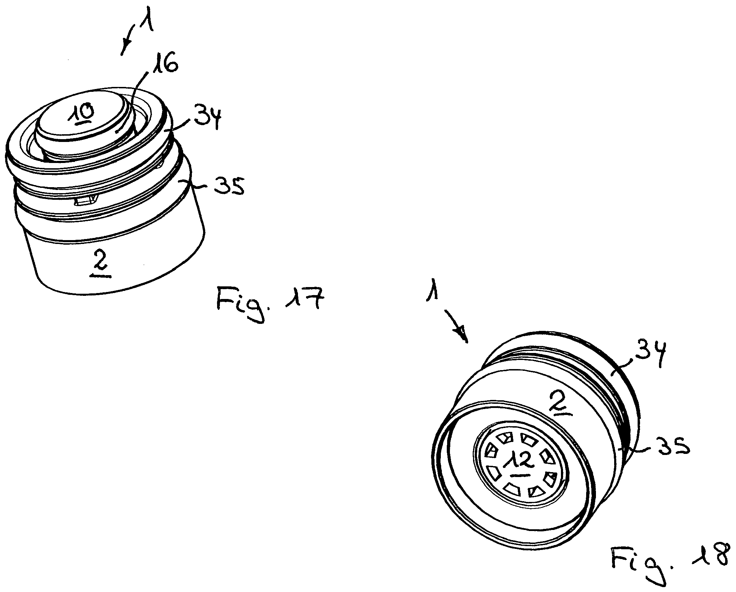

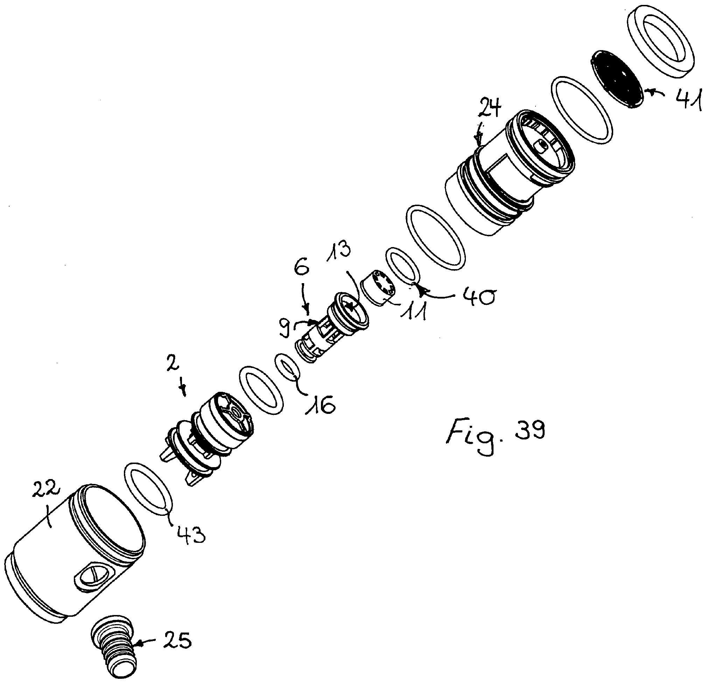

In den Figuren 1 bis 39 ist ein sanitäres Umschaltventil 1 in verschiedenen Ausführungen und Anwendungsbeispielen gezeigt. Das Umschaltventil 1 ist hier zum Einbau in eine Wasserleitung bestimmt, um das Wasser wahlweise bei Bedarf entweder aus dem einen Wasserauslass oder einem anderen Wasserauslass austreten zu lassen. Das sanitäre Umschaltventil 1 weist ein Ventilgehäuse 2 auf, das einen Ventileinlass 3 und zwei wahlweise ansteuerbare Ventilauslässe 4, 5 hat. In dem Ventilgehäuse 2 ist ein Ventilkolben 6 verschieblich geführt, der zwischen der beispielsweise in Figur 1 gezeigten ersten Umstellposition und der in Figur 2 demgegenüber dargestellten zweiten Umstellposition bewegbar ist. Während in der ersten Umstellposition gemäß Figur 1 das Wasser über einen, durch den ersten Ventilauslass 4 führenden Strömungsweg geführt ist, wird das Fluid in der zweiten Umstellposition gemäß Figur 2 durch einen über den zweiten Ventilauslass 5 führenden Strömungsweg gelenkt, sobald der vom Umschaltventil 1 weiterführende Abschnitt des zweiten Strömungsweges freigegeben und dazu beispielsweise ein an einer Handbrause vorgesehenes Schließ- oder Regelventil geöffnet wurde.

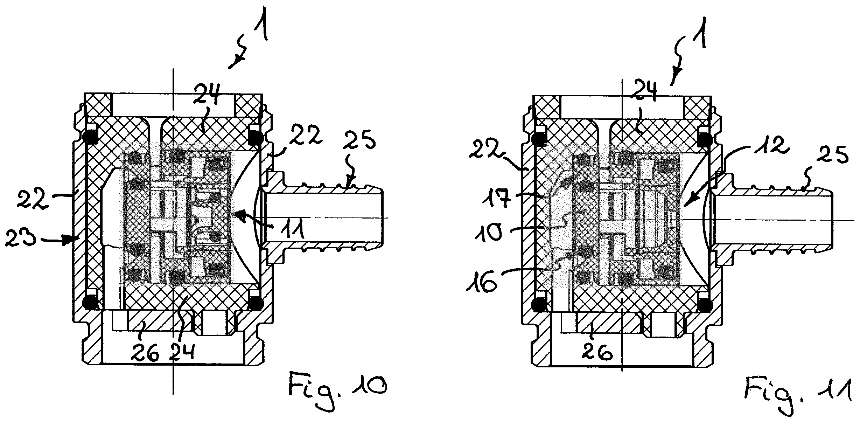

Der im Ventilgehäuse 2 verschieblich geführte Ventilkolben 6 ist als Hohlkörper ausgebildet, durch den das Wasser über wenigstens einen am Kolbenumfang angeordneten Kolbeneinlass 9 im Verlauf zumindest eines der Strömungswege geführt ist. Um das Umschaltventil 1 auf einfache Weise nun an eine bestimmte Anwendung anpassen zu können, ist das durch den wenigstens einen Kolbeneinlass 9 geführte Fluid im Verlaufe des zweiten Strömungsweges gemäß Figur 2 durch einen, an der dem Kolbenboden 10 abgewandten Kolbenstirnseite vorgesehenen ersten Kolbenauslass geführt. In diesem ersten Kolbenauslass ist ein Rückflussverhinderer vorgesehen. Aus einem Vergleich der Figuren 10 und 11 wird deutlich, dass zusätzlich oder statt eines solchen Rückflussverhinderers auch der in Figur 10 gezeigte Durchflussmengenregler 11 oder die in Figur 11 dargestellte Durchflussdrossel 12 vorgesehen sein kann. Diese sanitären Zubehörteile 11, 12 sind hier als Einsetzpatrone ausgebildet, wobei im Hohlkörper-Innenraum des Ventilkolbens 6 eine Patronenaufnahme 13 vorgesehen ist, deren Einsetzöffnung an der dem Kolbenboden 10 abgewandten Kolbenstirnseite des Ventilkolbens 6 angeordnet ist.

Um das Umschaltventil 1 auf einfache Weise nun an eine bestimmte Anwendung anpassen zu können, kann in den ersten Kolbenauslass des Ventilkolbens 6 beispielsweise die den Durchflussquerschnitt reduzierende Durchflussdrossel 12 oder der das pro Zeiteinheit durchströmende Durchflussvolumen auf einen druckunabhängigen festgelegten Durchflusswert einregelnde Durchflussmengenregler 11 vorgesehen sein, wobei je nach der gewünschten Anwendung zwischen zumindest einem dieser sanitären Zubehörteile 11, 12 ausgewählt werden kann. Da dabei der Hohlkörper-Innenraum des Ventilkolbens 6 zum Einbau des zumindest einen sanitären Zubehörteiles 11, 12 verwendet wird, zeichnet sich das hier dargestellte Umschaltventil 1 durch seine einfache, kompakte und platzsparende Bauweise aus.

Da der Ventilkolben 6 an seiner dem Kolbenboden 10 abgewandten Kolbenstirnseite die Patronenaufnahme 13 aufweist, in die der als Einsetzpatrone ausgebildete Durchflussmengenregler 11 oder die ebenfalls als Einsetzpatrone ausgestaltete Durchflussdrossel 12 eingesetzt werden kann, kann auch auf handelsübliche sanitäre Zubehörteile zurückgegriffen werden, wenn dies die vorgesehene Anwendung erfordert.

Aus einem Vergleich der Längsschnitte in den Figuren 1, 2, 3, 5, 10, 11, 19, 20 und 27 bis 38 wird deutlich, dass der Ventilkolben 6 an seiner dem Kolbenboden 10 abgewandten Kolbenstirnseite einen im Vergleich zum Kolbenboden 10 größeren Außenumfang hat. Auf diese Weise ist der beim Schließen des zweiten Strömungsweges gemäß Figur 1 auf den Ventilkolben 6 einwirkende Rückstaudruck auf jeden Fall größer als der seitens des ersten Strömungsweges einwirkende Fluiddruck und der erste Strömungsweg bleibt offen. Die sich infolge der verschiedenen Außendurchmesser an den gegenüberliegenden Stirnenden des Ventilkolbens ergebenden Flächenunterschiede bewirken unterschiedliche Kräfte, welche das Hin- und Herschalten zwischen den beiden, in Figur 1 und 2 beispielhaft gezeigten Modi ermöglichen. In dem in Figur 2 gezeigten Modus wird die resultierende Kraft an der Kolbenfläche des Ventilkolbens 6 durch die Durchströmung des dort verwendeten Durchflussmengenreglers 11 für die zeitgleiche Abdichtung des ersten Strömungsweges benötigt.

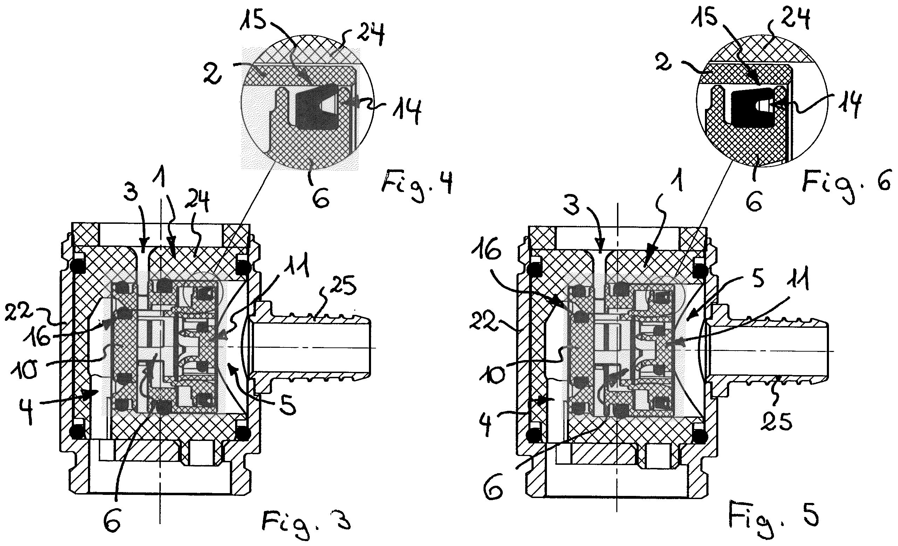

In den Figuren 3 bis 6 ist erkennbar, dass der Ventilkolben 6 an seinem dem Kolbenboden 10 abgewandten Stirnendbereich außenumfangsseitig einen ersten Dichtring hat, der als umlaufende Lippendichtung 14 ausgebildet ist, die eine Dichtlippe 15 aufweist, welche Dichtlippe 15 derart schräg zum Schiebeweg des Ventilkolbens 6 angeordnet ist, dass das freie Lippenende dieser Dichtlippe 15 in die dem Kolbenboden 10 abgewandte Richtung weist. Um nämlich die Funktion des Umschaltventiles 1 auch im Niederdruckbereich, ab etwa 0,2 bar, sicherzustellen, ist der Ventilkolben 6 insbesondere im Verlauf des in Figur 2 gezeigten zweiten Strömungsweges gegenüber dem Ventilgehäuse 2 abzudichten. Der in den Figuren 3 bis 6 dazu als Lippendichtung 14 ausgebildete erste Dichtring bietet den Vorteil, dass diese Lippendichtung 14 sich entsprechend dem anstehenden Druck verformen kann. Diese Lippendichtung 14 wird im Umschaltventil 1, entgegen dem Stand der Technik, umgekehrt montiert. Dabei wird bei einem entsprechend hohen Druck die Dichtlippe 15 eingeklappt. Dieser, in den Figuren 5 und 6 im Detail gezeigte Effekt dient der Reibungsreduzierung, wodurch das Hin- und Herschalten zwischen dem ersten Strömungsweg und dem zweiten Strömungsweg erheblich verbessert wird. Darüber hinaus kann durch den zwischen Dichtlippe 15 und Gehäuseinnenumfang des Ventilgehäuses 2 verbleibenden Ringspalt eine zusätzliche Wassermenge fließen. Bei niedrigem Druck hingegen könnte durch diesen Ringspalt ohne die vorhandene Lippendichtung 14 eventuell zu viel Wasser am Ventilkolben 6 vorbeifließen. Diese Wassermenge aber würde beim Durchströmen des Durchflussmengenreglers 11 oder der Durchflussdrossel 12 fehlen, wodurch nicht genügend Kraft des ersten Strömungsweges im Verlaufe des zweiten Strömungsweges erzeugt werden würde.

Demgegenüber weist der Ventilkolben 6 an seinem dem Kolbenboden 10 zugewandten Stirnendbereich außenumfangsseitig wenigstens einen zweiten Dichtring 16 auf, der als O-Ring ausgebildet ist und über den Kolbenumfang vorsteht. In der zweiten Umstellposition gemäß Figur 2 liegt dieser Dichtring 16 an einer sich zum Ventilkolben 6 hin verjüngenden und ringförmig umlaufenden Schrägfläche derart dicht an, dass der erste Strömungsweg dicht verschlossen ist. Diese Schrägfläche wird durch den ringförmig umlaufenden Gehäuseinnenwand-Abschnitt 7 gebildet.

Aus Fig. 1 und den Fig. 27 bis 39 wird deutlich, dass der Ventilkolben 6 an seinem Kolbenumfang, vorzugsweise in dem zwischen dem wenigstens einen ersten Dichtring 14, 40 einerseits und dem zweiten Dichtring 16 andererseits angeordneten Kolbenabschnitt zumindest einen zweiten Kolbenauslass 17 hat, über den der erste Strömungsweg des Fluids geführt ist. Dabei wird aus Figur 1 auch deutlich, dass dazu das zumindest eine, am Kolbenumfang vorgesehene und als Kolbeneinlass 9 dienende Kolbenfenster auch so groß bemessen sein kann, dass der zum Kolbeneinlass 9 führende Gehäuseeinlasskanal 36 und der vom Ventilkolben 6 wegführende Gehäuseauslasskanal 37 über den Kolbeninnenraum "kurzgeschlossen" wird.

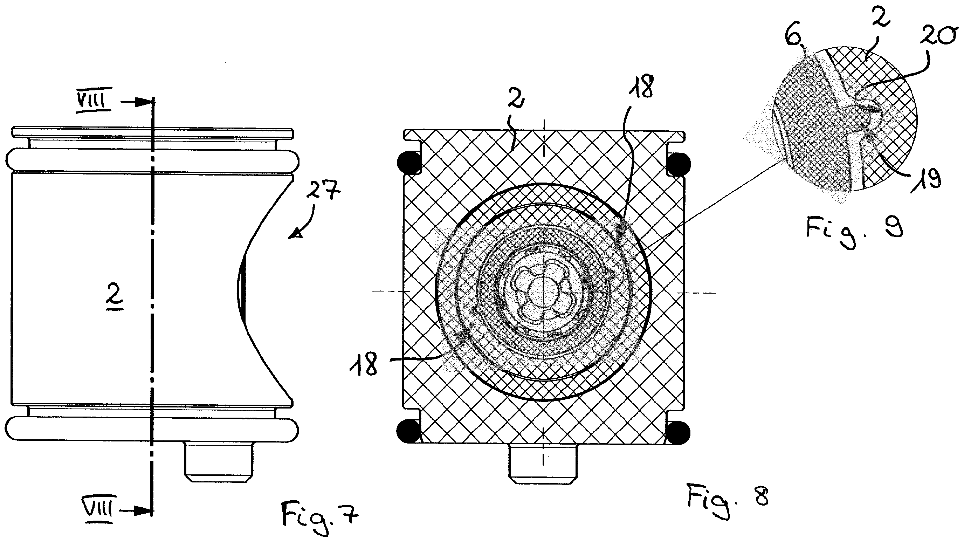

In den Figuren 7 bis 9 ist angedeutet, dass der im Ventilgehäuse 2 verschieblich geführte Ventilkolben 6 mittels einer Verdrehsicherung 18 verdrehgesichert geführt ist. Diese Verdrehsicherung 18 weist hier zumindest eine am Kolbenumfang des Ventilkolbens 2 angeordnete Sicherungsfeder 19 auf, die mit einer zugeordneten Sicherungsnut 20 an dem den Schiebeweg umgrenzenden Gehäuseinnenumfang des Ventilgehäuses 2 zusammenwirkt. Da dadurch der Ventilkolben 6 gegenüber dem Ventilgehäuse 2 gegen eine unbeabsichtigte Verdrehung gesichert ist, sind die die Flüssigkeitsein- und -auslässe bildenden Fensterausschnitte im Ventilkolben 6 einerseits und im Ventilgehäuse 2 andererseits immer in der korrekten Ausrichtung zueinander. Dadurch wird eine Querschnittsverengung und ein noch zusätzlich reduzierter Durchfluss verhindert. Ebenso wird eine Geräuschentwicklung vermindert, die sich durch solche unbeabsichtigten Querschnittsverengungen ergeben könnte.

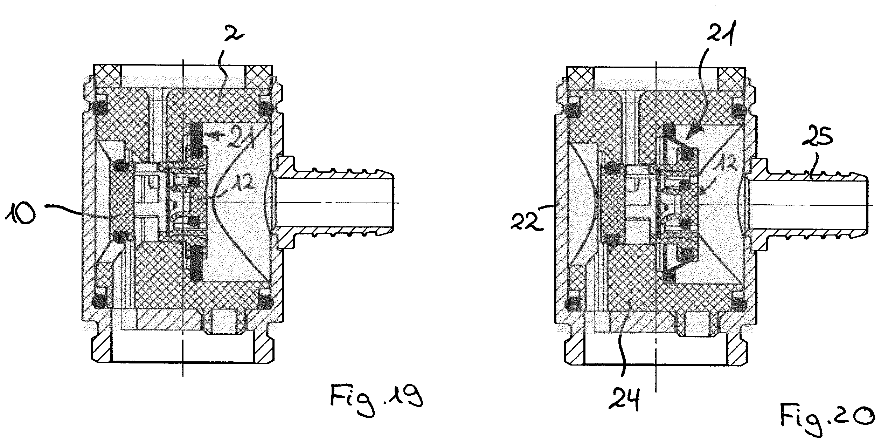

In den Figuren 19 und 20 ist ein Umschaltventil 1 gezeigt, bei dem der Ventilkolben an seinem dem Kolbenboden 10 abgewandten Stirnendbereich gegenüber dem den Ventilkolben 6 entlang seines Schiebeweges umgrenzenden Gehäuseinnenumfang des Ventilgehäuses 2 mittels einer Rollmembrane 21 abgedichtet ist. Diese Rollmembrane 21 ist einerseits am Kolbenumfang des Ventilkolbens 6 und andererseits am Gehäuseinnenumfang des Ventilgehäuses 2 dicht gehalten. Durch eine solche Rollmembrane 21 wird die Funktionsweise des Umschaltventiles insbesondere im Niederdruckbereich weiter verbessert, da hier deutlich weniger Reibung im Vergleich zu einem dynamischen und radial dichtenden Dichtring oder einer Lippendichtung 14 auftritt.

Das hier dargestellte Umschaltventil 1 wird als Bestandteil einer sanitären Baugruppe verwendet, die ein Kupplungsgehäuse 22 aufweist. Mit Hilfe dieses" Kupplungsgehäuses 22 kann die Baugruppe in zwei aneinander angrenzende Leitungsabschnitte einer Wasserleitung eingefügt werden. Dieses Kupplungsgehäuse 22 weist einen hülsenförmigen Gehäuseabschnitt 23 zur Aufnahme eines Einsetzgehäuses 24 auf. An den hülsenförmigen Gehäuseabschnitt 23 des Kupplungsgehäuses 22 ist seitlich ein Leitungsanschluss 25 für den zweiten Strömungsweg vorgesehen. Während das eine Stirnende des hülsenförmigen Gehäuseabschnitts 23 einen Gehäuseeinlass bildet, ist das andere Stirnende des Kupplungsgehäuses 22 als Gehäuseauslass ausgestaltet. Um die benötigten Bauteile zu reduzieren, kann das Ventilgehäuse aber - wie die Fig.19 und 20 beispielhaft zeigen - auch direkt in ein Kupplungsgehäuse 22 eingesetzt sein, wenn auf ein separates Einsetzgehäuse 24 verzichtet werden soll.

Die am Außenumfang des Ventilgehäuses 2 vorgesehenen Dichtringe 32, 33 trennen den Ventileinlass 3 des Ventilgehäuses 2 von den, jeweils einem der Ventilauslässe 4 oder 5 zugeordneten Strömungswegen ab, wenn der Wasserweg durch das Ventilgehäuse 2 aktiv ist. Im Verlaufe des zweiten Strömungsweges dichtet die Lippendichtung 14 zwischen dem Kolbenaußenumfang des Ventilkolbens 6 einerseits und dem Gehäuseinnenumfang des Ventilgehäuses 2 andererseits derart dicht ab, dass das gesamte Wasser durch den im Ventilkolben 6 vorgesehenen Durchflussmengenregler 11 oder die dort stattdessen angeordnete Durchflussdrossel 12 hindurchfließen muss. Die am Außenumfang des Einsetzgehäuses vorgesehenen und an den gegenüberliegenden Stirnendbereichen des Einsetzgehäuses 24 vorgesehenen Ringdichtungen 34, 35 dichten den zwischen dem Einsetzgehäuse 24 und dem Kupplungsgehäuse 22 verbleibenden Ringspalt und damit ebenfalls die zu den Ventilauslässen 4, 5 führenden Strömungswege ab. Das Einsetzgehäuse 24 dient der Umlenkung der beiden Strömungswege und ermöglicht eine einfache Montage des Ventilgehäuses 2 im Kupplungsgehäuse 22. An dem hülsenförmigen Gehäuseabschnitt 23 des Kupplungsgehäuses 22 ist seitlich ein Leitungsanschluss 25 für den zweiten Strömungsweg vorgesehen. An diesen seitlich vorstehenden Leitungsanschluss 25 kann eine gewünschte Zusatzapplikation, zum Beispiel eine Handbrause, über einen vorzugsweise flexiblen Schlauch angeschlossen werden. Das Einsetzgehäuse 24 ist von der einlassseitigen Stirnseite des Kupplungsgehäuses 22 in dessen hülsenförmigen Gehäuseabschnitt 23 bis zu einem Einsetzanschlag 26 einschiebbar. Das Einsetzgehäuse 24 weist eine Gehäuseaufnahme 27 für das Ventilgehäuse 2 auf, wobei diese Gehäuseaufnahme 27 des Einsetzgehäuses 24 eine Einsetzöffnung hat, die am Gehäuseaußenumfang des Einsetzgehäuses 24 vorgesehen ist und mit dem seitlichen Leitungsanschluss des Kupplungsgehäuses 22 in etwa fluchtet.

Das hier dargestellte Umschaltventil 1 lässt sich durch Auswechseln der in seinen Ventilkolben 6 eingesetzten Zubehörteile auf einfache Weise an die unterschiedlichsten Anwendungen anpassen. Dabei können auch unterschiedliche Durchflussmengenregler 11 oder verschiedene Drosseln 12 in den Ventilkolben 6 eingesetzt werden. Möglich ist auch die Verwendung einer einstellbaren Durchflussdrossel oder eines einstellbaren Durchflussmengenreglers.

Das hier dargestellte Umschaltventil 1, das auch im Niederdruckbereich, ab etwa 0,2 bar, vorteilhaft einsetzbar ist, zeichnet sich durch seine verringerte Baugröße, seine gute Anpassungsmöglichkeit auf die unterschiedlichen Anwendungen sowie seine vielseitige Anwendbarkeit aus. Da die Bestandteile des Umschaltventiles 1 kartuschenartig ineinander geschoben sind, wird die Montage des erfindungsgemäßen Umschaltventiles 1 wesentlich vereinfacht.

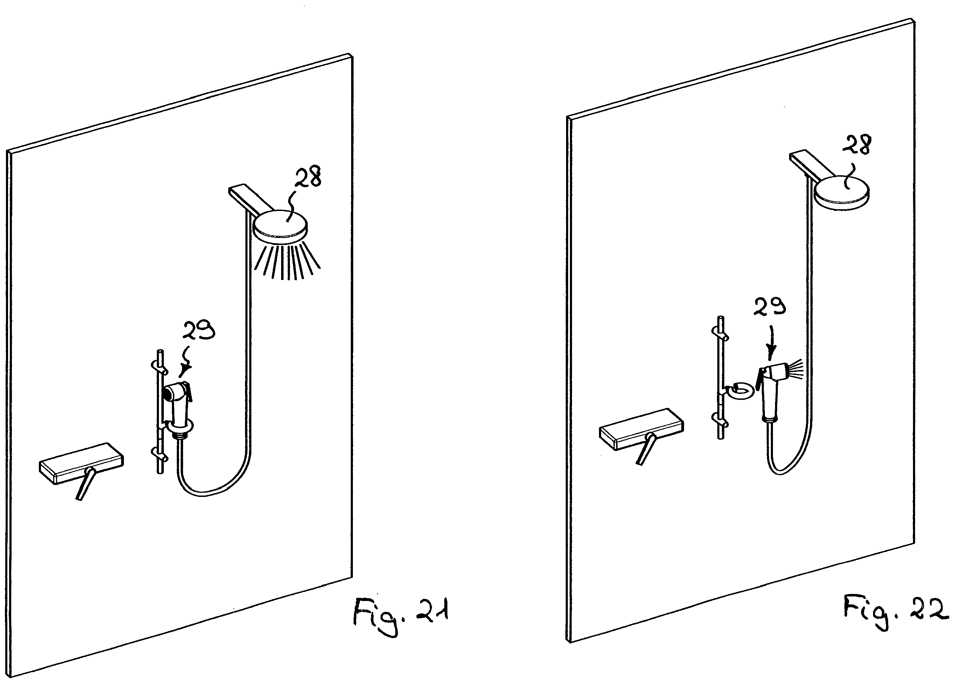

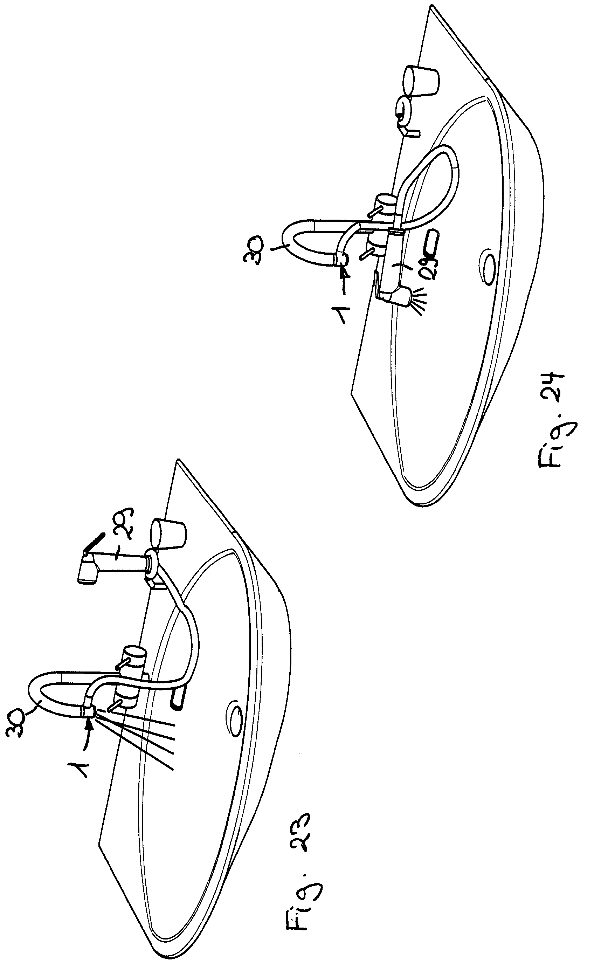

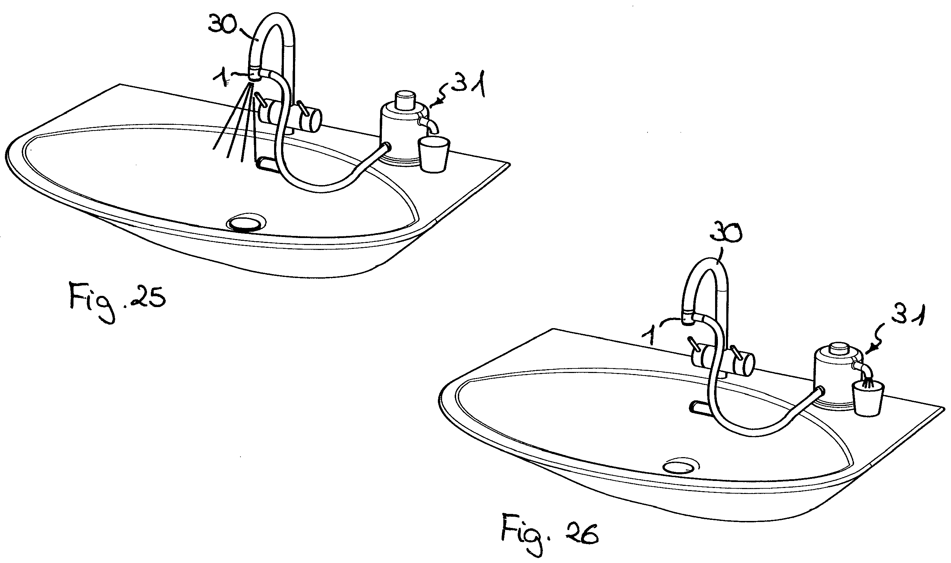

In dem in den Figuren 21 und 22 gezeigten Ausführungsbeispiel ist dargestellt, dass das hier nicht weiter erkennbare Umschaltventil auch in die zu einer wand- oder deckenseitig montierten Kopfbrause 28 führende Wasserleitung zwischengeschaltet sein kann, um bei Bedarf zwischen der Kopfbrause 28 und einer über den zweiten Strömungsweg ansteuerbaren Handbrause 29 umschalten zu können. Wie das in den Figuren 23 und 24 gezeigte Ausführungsbeispiel zeigt, kann das Umschaltventil 1 aufgrund seiner platzsparenden Bauweise auch in den Wasserauslauf einer sanitären Auslaufarmatur 30 zwischengeschaltet werden, um bei Bedarf über diesen Wasserauslauf hinaus auch über eine Handbrause 29 verfügen zu können. In dem in den Figuren 25 und 26 gezeigten Beispiel ist das Umschaltventil 1 ebenfalls am Wasserauslauf einer sanitären Auslaufarmatur 30 angeschraubt, um bei Bedarf das aus dem Versorgungsnetz kommende Wasser über den Wasserauslass eines separaten Wasserfilters 31 entnehmen zu können.

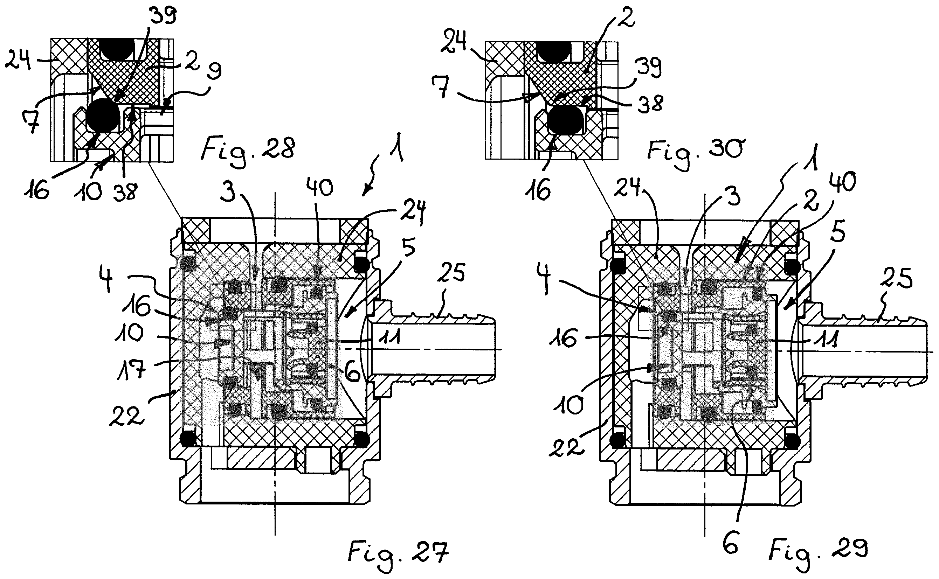

In den Fig. 27 bis 30 ist ein weiteres Ausführungsbeispiel des sanitären Umschaltventils 1 dargestellt. Die Fig. 27 bis 30 zeigen dieses Umschaltventil 1 in seiner zweiten Umstellposition, in welcher der zweite Dichtring 16, der an dem dem Kolbenboden 10 des Ventilkolbens 6 zugewandten Stirnendbereich außenumfangsseitig vorsteht, an der Gehäuseinnenwand des Ventilgehäuses 2 dichtend anliegt. Diese Gehäuseinnenwand wird auch bei dem hier gezeigten Ausführungsbeispiel in zwei benachbarte Gehäuseinnenwand-Abschnitte 7, 38 unterteilt, von denen der dem zweiten Ventilauslass 5 des Ventilgehäuses 2 abgewandte Gehäuseinnenwand-Abschnitt 7 sich zum Ventilkolben 6 hin verjüngt und von denen der dem zweiten Ventilauslass 5 zugewandte Gehäuseinnenwand-Abschnitt 38 hier zylindrisch ausgestaltet ist. Die benachbarten Gehäuseinnenwand-Abschnitte 7, 38 sind durch eine am Gehäuseinnenumfang ringförmig umlaufende Kante 39 voneinander getrennt. Aus einem Vergleich der Fig. 27 und 28 einerseits und der Fig. 29 und 30 andererseits wird nun deutlich, dass in der hier gezeigten zweiten Umstellposition der Ventilkolben 6 durch den Druck des anströmenden Fluids von der ersten Schiebestellung, in welcher der Ventilkolben 6 mit seinem zweiten Dichtring 16 an der Kante 39 dichtend anliegt, in die in den Fig. 29 und 30 gezeigte zweite Schiebestellung bewegbar ist, in welcher der zweite Dichtring 16 an dem benachbarten zylindrischen Gehäuseinnenwand-Abschnitt 38 radial dichtend anliegt.

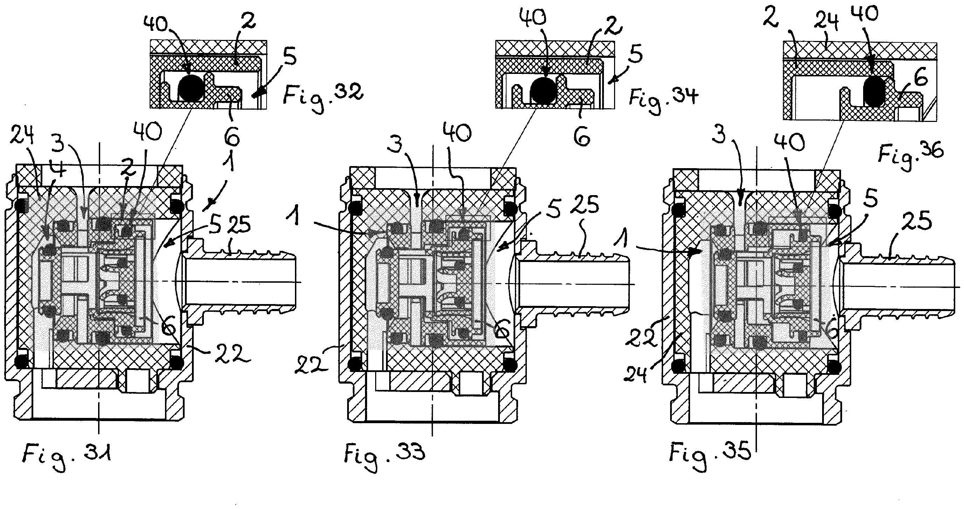

In den Fig. 31 bis 36 ist ein weiteres Ausführungsbeispiel des sanitären Umschaltventils 1 gezeigt, dessen Ventilkolben 6 an seinem dem Kolbenboden 10 abgewandten Stirnendbereich außenumfangsseitig einen Dichtring 40 aus elastischem Material hat. Während das Umschaltventil 1 in den Fig. 31 und 32 in seiner ersten Umschaltposition gezeigt ist, ist das Umschaltventil 1 in den Fig. 35 und 36 in seiner zweiten Umschaltposition dargestellt. Demgegenüber zeigen die Fig. 33 und 34 das Umschaltventil 1 in einer Zwischenstellung zwischen der ersten Umschaltposition gemäß den Fig. 31 und 32 einerseits und der in den Fig. 35 und 36 dargestellten zweiten Umschaltposition. Aus einem Vergleich der Fig. 33 und 34 einerseits und den Fig. 35 und 36 andererseits wird deutlich, dass der hier als O-Ring 40 ausgebildete erste Dichtring unter dem Druck des in der zweiten Umstellposition anströmenden Fluids derart verformbar ist, dass er den Ringspalt zwischen dem Außenumfang des Ventilkolbens 6 und dem Innenumfang des Ventilgehäuses 2 abdichtet. Da der hier als O-Ring 40 ausgebildete erste Dichtring erst nach Erreichen der zweiten Umstellposition beziehungsweise auf dem Weg dahin den Ventilkolben 6 abdichtet, ergibt sich eine wesentlich geringere Reibung im Vergleich zu einem Dichtring, der den Ventilkolben 6 permanent zum Ventilgehäuse 2 hin abdichtet. Durch die dargestellte Abdichtung des Ventilkolbens 6 in der zweiten Umstellposition fließt das gesamte Wasser durch den Ventilkolben 6 sowie den darin vorgesehenen Durchflussmengenregler 11, wodurch sich eine optimierte Regelkurve dieses Durchflussmengenreglers 11 ergibt.

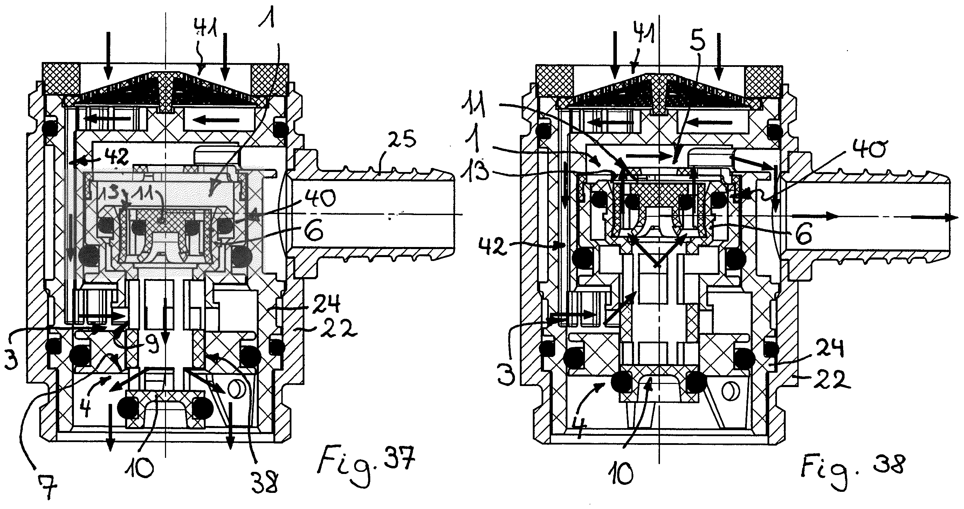

In den Fig. 37 bis 39 ist ein weiteres Ausführungsbeispiel des Umschaltventils 1 dargestellt. Die hier dargestellte Ausführung unterscheidet sich von den zuvor gezeigten Ausführungsbeispielen im Wesentlichen nur durch die axiale Ausrichtung des Umschaltventils 1, dessen Ventilkolben 6 hier in Strömungsrichtung des anströmenden Fluids im Ventilgehäuse 2 verschieblich geführt ist. Dabei strömt das anströmende Fluid zunächst durch das zuströmseitig vorgeschaltete Filtersieb 41 hindurch, um anschließend an der zuströmseitigen Stirnseite des Einsetzgehäuses 24 radial nach außen umgelenkt zu werden. Das radial nach außen umgelenkte Fluid strömt sodann über einen im Einsetzgehäuse 24 vorgesehenen und in axialer Richtung orientierten Kanalabschnitt 42 in das Ventilgehäuse 2 ein, das dazu an seinem Gehäuseumfang den Ventileinlass 3 hat. In dem Ventilgehäuse 2 ist der Ventilkolben 6 zwischen einer ersten Umstellposition (vgl. Fig. 37), in der das Fluid über einen, durch einen ersten Ventilauslass 4 führenden Strömungsweg geführt ist, in eine zweite Umstellposition (vgl. Fig. 38), in der das Fluid durch einen über einen zweiten Ventilauslass 5 führenden Strömungsweg geführt ist, verschiebbar, sobald der vom Umschaltventil 1 weiterführende Abschnitt des zweiten Strömungsweges freigegeben wurde. Auch der Ventilkolben 6 des in den Fig. 37 bis 39 gezeigten Umschaltventiles 1 ist als Hohlkörper ausgebildet, durch den das Fluid durch wenigstens einen am Kolbenumfang angeordneten Kolbeneinlass 9 im Verlaufe zumindest eines der Strömungswege geführt ist. Das durch den wenigstens einen Kolbeneinlass 9 geführte Fluid ist im Verlaufe des zweiten Strömungsweges durch einen, an der dem Kolbenboden 10 abgewandten Kolbenstirnseite vorgesehenen ersten Kolbenauslass 5 geführt, wobei in diesem ersten Kolbenauslass eine Durchflussdrossel, ein Rückflussverhinderer oder - wie hier - ein Durchflussmengenregler 11 vorgesehen ist. Dieser Durchflussmengenregler 11 ist hier als Einsetzpatrone ausgebildet, welche Einsetzpatrone in eine Patronenaufnahme 13 im Hohlkörper-Innenraum des Ventilkolbens 6 eingesetzt ist. Die Einsetzöffnung dieser Patronenaufnahme 13 ist an der dem Kolbenboden 10 abgewandten Kolbenstirnseite des Ventilkolbens 6 angeordnet. Der Ventilkolben 6 auch des in den Fig. 37 bis 39 gezeigten Umschaltventils 1 hat an seiner dem Kolbenboden 10 abgewandten Kolbenstirnseite einen im Vergleich zum Kolbenboden 10 größeren Außenumfang.

### Bezugszeichenliste

- 1: Umschaltventil
- 2: Ventilgehäuse
- 3: Ventileinlass (des Ventilgehäuses 2)
- 4: Ventilauslass (für den ersten Strömungsweg)
- 5: Ventilauslass (für den zweiten Strömungsweg)
- 6: Ventilkolben
- 7: Gehäuseinnenwand-Abschnitt
- 9: Kolbeneinlass
- 10: Kolbenboden
- 11: Durchflussmengenregler
- 12: Durchflussdrossel
- 13: Patronenaufnahme
- 14: als Lippendichtung ausgebildeter erster Dichtring
- 15: Dichtlippe
- 16: zweiter Dichtring
- 17: zweiter Kolbenauslass
- 18: Verdrehsicherung
- 19: Sicherungsfeder
- 20: Sicherungsnut
- 21: Rollmembran
- 22: Kupplungsgehäuse
- 23: hülsenförmiger Gehäuseabschnitt (des Kupplungsgehäuses 22)
- 24: Einsetzgehäuse
- 25: seitlicher Leitungsanschluss (für den zweiten Strömungsweg)
- 26: Einsetzanschlag
- 27: Gehäuseaufnahme
- 28: Kopfbrause
- 29: Handbrause
- 30: Auslaufarmatur
- 31: Wasserfilter
- 32: Dichtring
- 33: Dichtring
- 34: Ringdichtung
- 35: Ringdichtung
- 36: Gehäuseeinlasskanal
- 37: Gehäuseauslasskanal
- 38: (zylindrischer) Gehäuseinnenwand-Abschnitt
- 39: Kante
- 40: als O-Ring ausgestalteter erster Dichtring
- 41: Filtersieb
- 42: Kanalabschnitt

## Patentansprüche

1. Sanitäres Umschaltventil (1) mit einem Ventilgehäuse (2), das einen Ventileinlass (3) und zwei wahlweise ansteuerbare Ventilauslässe (4, 5) hat, mit einem Ventilkolben (6), der von einer ersten Umstellposition, in der das Fluid über einen, durch einen ersten Ventilauslass (4) führenden Strömungsweg geführt ist, in eine zweite Umstellposition, in der das Fluid durch einen über einen zweiten Ventilauslass (5) führenden Strömungsweg geführt ist, bewegbar ist, sobald der vom Umschaltventil (1) weiterführende Abschnitt des zweiten Strömungsweges freigegeben wurde, wobei der Ventilkolben (6) als Hohlkörper ausgebildet ist, durch den das Fluid durch wenigstens einen am Kolbenumfang angeordneten Kolbeneinlass (9) im Verlaufe zumindest eines der Strömungswege geführt ist, wobei das durch den wenigstens einen Kolbeneinlass (9) geführte Fluid im Verlaufe des zweiten Strömungsweges durch einen, an der dem Kolbenboden (10) abgewandten Kolbenstirnseite vorgesehenen ersten Kolbenauslass geführt ist, **dadurch gekennzeichnet, dass** im ersten Kolbenauslass eine Durchflussdrossel (12), ein Durchflussmengenregler (11) oder ein Rückflussverhinderer vorgesehen ist.

2. Sanitäres Umschaltventil nach Anspruch 1, **dadurch gekennzeichnet, dass** die Durchflussdrossel (12), der Durchflussmengenregler (11) oder der Rückflussverhinderer als Einsetzpatrone ausgebildet ist und dass im Hohlkörper-Innenraum des Ventilkolbens (6) eine Patronenaufnahme (13) vorgesehen ist, deren Einsetzöffnung an der dem Kolbenboden abgewandten Kolbenstirnseite des Ventilkolbens angeordnet ist.

3. Sanitäres Umschaltventil nach Anspruch 1 oder 2, **dadurch gekennzeichnet, dass** der Ventilkolben (6) an seiner dem Kolbenboden (10) abgewandten Kolbenstirnseite einen im Vergleich zum Kolbenboden (10) größeren Außenumfang hat.

4. Sanitäres Umschaltventil nach einem der Ansprüche 1 bis 3, **dadurch gekennzeichnet, dass** der Ventilkolben (6) an seinem dem Kolbenboden (10) abgewandten Stirnendbereich außenumfangsseitig wenigstens einen ersten Dichtring hat, der als umlaufende Lippendichtung (14) ausgebildet ist, welche Lippendichtung (14) mindestens eine Dichtlippe (15) aufweist, die derart schräg zum Schiebeweg des Ventilkolbens (6) angeordnet ist, dass das freie Lippenende der mindestens einen Dichtlippe (15) in die dem Kolbenboden (10) abgewandte Richtung weist.

5. Sanitäres Umschaltventil nach einem der Ansprüche 1 bis 3, **dadurch gekennzeichnet, dass** der Ventilkolben (6) an seinem dem Kolbenboden abgewandten Stirnendbereich außenumfangsseitig einen als O-Ring (40) ausgestalteten ersten Dichtring hat, der (40) unter dem Druck des in der zweiten Umstellposition anströmenden Fluids derart verformbar ist, dass er (40) den Ringspalt zwischen dem Außenumfang des Ventilkolbens (6) und dem Innenumfang des Ventilgehäuses (2) abdichtet.

6. Sanitäres Umschaltventil nach einem der Ansprüche 1 bis 5, **dadurch gekennzeichnet, dass** der Ventilkolben (6) an seinem dem Kolbenboden (10) zugewandten Stirnendbereich außenumfangsseitig wenigstens einen, über den Kolbenumfang vorstehenden zweiten Dichtring (16) hat, der (16) in der zweiten Umstellposition an einem sich zum Ventilkolben (6) hin verjüngenden und ringförmig umlaufenden Gehäuseinnenwand-Abschnitt (7) anliegt.

7. Sanitäres Umschaltventil nach einem der Ansprüche 1 bis 6, **dadurch gekennzeichnet, dass** der Ventilkolben (6) an seinem Kolbenumfang zumindest einen zweiten Kolbenauslass (17) hat, über den der erste Strömungsweg des Fluids geführt ist.

8. Sanitäres Umschaltventil nach Anspruch 7, **dadurch gekennzeichnet, dass** der zumindest eine zweite Kolbenauslass (17) in dem zwischen dem wenigstens einen ersten Dichtring (14, 40) einerseits und dem zweiten Dichtring (16) andererseits angeordneten Kolbenabschnitt vorgesehen ist.

9. Sanitäres Umschaltventil nach einem der Ansprüche 6 bis 8, **dadurch gekennzeichnet, dass** der sich zum Ventilkolben (6) hin verjüngende Gehäuseinnenwand-Abschnitt (7) von einem benachbarten zylindrischen Gehäuseinnenwand-Abschnitt (38) durch eine Kante (39) getrennt ist, und dass in der zweiten Umstellposition der Ventilkolben (6) durch den Druck des anströmenden Fluids von einer ersten Schiebestellung, in welcher der Ventilkolben (6) mit seinem zweiten Dichtring (16) an der Kante (39) dichtend anliegt, in eine zweite Schiebestellung bewegbar ist, in welcher der zweite Dichtring (16) an dem benachbarten zylindrischen Gehäuseinnenwand-Abschnitt (38) radial dichtend anliegt.

10. Sanitäres Umschaltventil nach einem der Ansprüche 1 bis 9, **dadurch gekennzeichnet, dass** der im Ventilgehäuse (2) verschieblich geführte Ventilkolben (6) mittels einer Verdrehsicherung (18) verdrehgesichert geführt ist.

11. Sanitäres Umschaltventil nach Anspruch 10, **dadurch gekennzeichnet, dass** die Verdrehsicherung wenigstens eine am Kolbenumfang des Ventilkolbens (6) angeordnete Sicherungsnut oder Sicherungsfeder (19) aufweist, die mit einer zugeordneten Sicherungsfeder oder Sicherungsnut (20) an dem dem Schiebeweg umgrenzenden Gehäuseinnenumfang des Ventilgehäuses (2) zusammenwirkt.

12. Sanitäres Umschaltventil nach einem der Ansprüche 1 bis 11, **dadurch gekennzeichnet, dass** der Ventilkolben (6) an seinem dem Kolbenboden (10) abgewandten Stirnendbereich gegenüber dem den Ventilkolben (6) entlang seines Schiebeweges umgrenzenden Gehäuseinnenumfang des Ventilgehäuses (2) mittels einer Rollmembran (21) oder einer Membrandichtung abgedichtet ist, die einerseits am Kolbenumfang und andererseits am Gehäuseinnenumfang dicht gehalten ist.

13. Sanitäre Baugruppe mit einem Umschaltventil nach einem der Ansprüche 1 bis 12, dessen Ventilgehäuse (2) in ein Einsetzgehäuse (24) eingesetzt ist, welches Einsetzgehäuse (24) seinerseits in einem Kupplungsgehäuse angeordnet ist, welches Kupplungsgehäuse (22) einen hülsenförmigen Gehäuseabschnitt (23) zur Aufnahme des Einsetzgehäuses (24) aufweist, an dem seitlich ein Leitungsanschluss (25) für den zweiten Strömungsweg vorgesehen ist, wobei das eine Stirnende des hülsenförmigen Gehäuseabschnitts (23) einen Gehäuseeinlass des Kupplungsgehäuses (22) und das andere Stirnende dessen Gehäuseauslass bildet.

14. Sanitäre Baugruppe nach Anspruch 13, **dadurch gekennzeichnet, dass** das Einsetzgehäuse (24) von der einlassseitigen Stirnseite des Kupplungsgehäuses (22) aus in dieses bis zu einem Einsetzanschlag (26) einschiebbar ist.

15. Sanitäre Baugruppe nach Anspruch 13 oder 14, **dadurch gekennzeichnet, dass** das Einsetzgehäuse (24) eine Gehäuseaufnahme (27) für das Ventilgehäuse (2) aufweist und dass diese Gehäuseaufnahme (27) des Einsetzgehäuses (24) eine Einsetzöffnung hat, die am Gehäuseumfang des Einsetzgehäuses (24) vorgesehen ist.

## Claims

1. Sanitary change-over valve (1) having a valve housing (2) which has one valve inlet (3) and two selectively actuatable valve outlets (4, 5), having a valve piston (6) which is movable from a first switch-over position in which the fluid is routed by way of a flow path that is routed through a first valve outlet (4) to a second switch-over position in which the fluid is routed by way of a flow path that is routed by way of a second valve outlet (5) as soon as that portion of the second flow path that is routed beyond the change-over valve (1) has been released, wherein the valve piston (6) is configured as a hollow body through which the fluid in the course of at least one of the flow paths is routed by way of at least one piston inlet (9) that is disposed on the piston circumference, wherein the fluid that is routed by way of the at least one piston inlet (9) in the course of the second flow path is routed by way of a first piston outlet that is provided on that piston end side that faces away from the piston base (10), **characterized in that** a flow throttle (12), a flow regulator (11), or a return flow preventer is provided in the first piston outlet.

2. Sanitary change-over valve according to Claim 1, **characterized in that** the flow throttle (12), the flow regulator (11), or the return flow preventer is configured as an insert cartridge, and **in that** a cartridge receptacle (13) is provided in the hollow-body interior of the valve piston (6), the insert opening of said cartridge receptacle (13) being disposed on that piston end side of the valve piston that faces away from the piston base.

3. Sanitary change-over valve according to Claim 1 or 2, **characterized in that** the valve piston (6) on that piston end side thereof that faces away from the piston base (10) has an external circumference that is comparatively larger than that of the piston base (10).

4. Sanitary change-over valve according to one of Claims 1 to 3, **characterized in that** the valve piston (6) on that front end region thereof that faces away from the piston base (10) on the side of the external circumference has at least one first annular seal which is configured as an encircling lip seal (14), said lip seal (14) having at least one sealing lip (15) which is disposed obliquely to the sliding path of the valve piston (6) in such a manner that the free lip end of the at least one sealing lip (15) points **in that** direction that faces away from the piston base (10).

5. Sanitary change-over valve according to one of Claims 1 to 3, **characterized in that** the valve piston (6) on that front end region thereof that faces away from the piston base on the side of the external circumference has a first annular seal that is designed as an O-ring (40) which (40) under the pressure of the flow of incident fluid in the second switch-over position is deformable in such a manner that said annular seal that is designed as an O-ring (40) seals the annular gap between the external circumference of the valve piston (6) and the internal circumference of the valve housing (2).

6. Sanitary change-over valve according to one of Claims 1 to 5, **characterized in that** the valve piston (6) on that front end region thereof that faces the piston base (10) on the side of the external circumference has at least one second annular seal (16) that projects beyond the piston circumference which second annular seal (16) in the second switch-over position bears on an annularly encircling housing inner wall portion (7) that tapers toward the valve piston (6).

7. Sanitary change-over valve according to one of Claims 1 to 6, **characterized in that** the valve piston (6) on the piston circumference thereof has at least one second piston outlet (17) by way of which the first flow path of the fluid is routed.

8. Sanitary change-over valve according to Claim 7, **characterized in that** the at least one second piston outlet (17) is provided **in that** piston portion that is disposed between the at least one first annular seal (14, 40), on the one hand, and the second annular seal (16), on the other hand.

9. Sanitary change-over valve according to one of Claims 6 to 8, **characterized in that** the housing inner wall portion (7) that tapers toward the valve piston (6) is separated from a neighboring cylindrical housing inner wall portion (38) by an edge (39), and **in that** the valve piston (6) in the second switch-over position is movable under the pressure of the flow of incident fluid from a first sliding position in which the valve piston (6) by way of the second annular seal (16) thereof bears in a sealing manner on the edge (39) to a second sliding position in which the second annular seal (16) bears in a radially sealing manner on the neighboring cylindrical housing inner wall portion (38).

10. Sanitary change-over valve according to one of Claims 1 to 9, **characterized in that** the valve piston (6) that is displaceably routed in the valve housing (2) is routed in a rotationally secured manner by means of an anti-rotation safeguard (18).

11. Sanitary change-over valve according to Claim 10, **characterized in that** the anti-rotation safeguard has at least one securing groove or securing spring (19) that is disposed on the piston circumference of the valve piston (6) and interacts with an assigned securing spring or securing groove (20) on that housing internal circumference of the valve housing (2) that borders the sliding path.

12. Sanitary change-over valve according to one of Claims 1 to 11, **characterized in that** the valve piston (6) on that front end region thereof that faces away from the piston base (10) in relation to that housing internal circumference of the valve housing (2) that borders the valve piston (6) along the sliding path thereof is sealed by means of a rolling diaphragm (21) or a diaphragm seal which is held tightly on the piston circumference, on the one hand, and on the housing internal circumference, on the other hand.

13. Sanitary functional group having a change-over valve according to one of Claims 1 to 12, the valve housing (2) of said change-over valve being inserted into an insert housing (24), said insert housing (24) on its part being disposed in a coupling housing, said coupling housing (22) having a sleeve-shaped housing portion (23) for receiving the insert housing (24), a line connector (25) for the second flow path being provided laterally on said sleeve-shaped housing portion (23), wherein the one front end of the sleeve-shaped housing portion (23) forms a housing inlet of the coupling housing (22) and the other front end forms the housing outlet of the latter.

14. Sanitary functional group according to Claim 13, **characterized in that** the insert housing (24) from the inlet-side front side of the coupling housing (22) is push-fittable into the latter up to an insert detent (26).

15. Sanitary functional group according to Claim 13 or 14, **characterized in that** the insert housing (24) has a housing receptacle (27) for the valve housing (2), and **in that** this housing receptacle (27) of the insert housing (24) has an insert opening which is provided on the housing circumference of the insert housing (24).

## Revendications

1. Soupape d'inversion sanitaire (1), comprenant un boîtier de soupape (2), qui comporte une entrée de soupape (3) et deux sorties de soupape (4, 5) qui peuvent être actionnées de manière sélective, un piston de soupape (6), qui peut se déplacer depuis une première position de permutation, dans laquelle le fluide est guidé sur une trajectoire d'écoulement conduisant à travers une première sortie de soupape (4), jusque dans une seconde position de permutation, dans laquelle le fluide est guidé à travers une trajectoire d'écoulement conduisant sur une seconde sortie de soupape (5), dès que la section de la seconde trajectoire d'écoulement qui se prolonge à partir de la soupape d'inversion (1) a été libérée, dans laquelle le piston de soupape (6) est configuré sous la forme d'un corps creux, à travers lequel est guidé le fluide à travers au moins une entrée de piston (9) disposée sur la périphérie du piston au cours d'au moins une des trajectoires d'écoulement, dans laquelle le fluide guidé à travers l'au moins une entrée de piston (9) est guidé, au cours de la seconde trajectoire d'écoulement, à travers une première sortie de piston prévue sur la face frontale du piston opposée au fond de piston (10),
**caractérisée en ce que**, dans la première sortie de piston, il est prévu un réducteur de débit (12), un régulateur de débit (11) ou un moyen empêchant l'écoulement en retour.

2. Soupape d'inversion sanitaire selon la revendication 1, **caractérisée en ce que** le réducteur de débit (12), le régulateur de débit (11) ou le moyen empêchant l'écoulement en retour est configuré sous la forme d'une cartouche d'insertion et **en ce que**, dans l'espace intérieur du corps creux du piston de soupape (6), il est prévu un logement de cartouche (13) dont l'ouverture d'insertion est disposée sur la face frontale du piston de soupape opposée au fond de piston.

3. Soupape d'inversion sanitaire selon la revendication 1 ou 2, **caractérisée en ce que** le piston de soupape (6) comporte, sur sa face frontale de piston opposée au fond de piston (10), une périphérie extérieure plus grande par rapport au fond de piston (10).

4. Soupape d'inversion sanitaire selon une des revendications 1 à 3, **caractérisée en ce que** le piston de soupape (6) comporte sur la face périphérique extérieure, sur sa zone d'extrémité frontale opposée au fond de piston (10), au moins une première bague d'étanchéité qui est configurée sous la forme d'un joint à lèvre (14) périphérique, lequel joint à lèvre (14) présente au moins une lèvre d'étanchéité (15) qui est disposée de manière inclinée par rapport au mouvement de poussée du piston de soupape (6) de telle sorte que l'extrémité de lèvre libre de l'au moins une lèvre d'étanchéité (15) est tournée dans la direction opposée au fond de piston (10).

5. Soupape d'inversion sanitaire selon une des revendications 1 à 4, **caractérisée en ce que** le piston de soupape (6) comporte sur la face périphérique extérieure, sur sa zone d'extrémité frontale opposée au fond de piston, une première bague d'étanchéité réalisée sous la forme d'un joint torique (40), lequel joint (40) peut être déformé sous la pression du fluide affluant dans la seconde position de permutation de telle sorte que le joint (40) rend étanche l'espace annulaire entre la périphérie extérieure du piston de soupape (6) et la périphérie intérieure du boîtier de soupape (2).

6. Soupape d'inversion sanitaire selon une des revendications 1 à 5, **caractérisée en ce que** le piston de soupape (6) comporte, sur la face périphérique extérieure, sur sa zone d'extrémité frontale en regard du fond de piston (10), au moins une seconde bague d'étanchéité (16) qui fait saillie au-dessus de la périphérie du piston, laquelle bague (16) se trouve, dans la seconde position de permutation, sur une section de paroi intérieure de boîtier (7) annulaire et périphérique qui se rétrécit vers le piston de soupape (6).

7. Soupape d'inversion sanitaire selon une des revendications 1 à 6, **caractérisée en ce que** le piston de soupape (6) comporte, sur sa périphérie de piston, au moins une seconde sortie de piston (17), sur laquelle la première trajectoire d'écoulement du fluide est guidée.

8. Soupape d'inversion sanitaire selon la revendication 7, **caractérisée en ce que** l'au moins une seconde sortie de piston (17) est prévue dans la section de piston disposée entre l'au moins une première bague d'étanchéité (14, 40) d'une part et la seconde bague d'étanchéité (16) d'autre part.

9. Soupape d'inversion sanitaire selon une des revendications 6 à 8, **caractérisée en ce que** la section de paroi intérieure de boîtier (7) qui se rétrécit vers le piston de soupape (6) est séparée d'une section de paroi intérieure de boîtier (38) cylindrique adjacente par un rebord (39), et **en ce que**, dans la seconde position de permutation, le piston de soupape (6) peut se déplacer, par la pression du fluide affluant, depuis une première position de poussée, dans laquelle le piston de soupape (6) repose de manière étanche sur le rebord (39) avec sa seconde bague d'étanchéité (16), jusque dans une seconde position de poussée, dans laquelle la seconde bague d'étanchéité (16) repose de manière étanche radialement sur la section de paroi intérieure de boîtier (38) cylindrique adjacente.

10. Soupape d'inversion sanitaire selon une des revendications 1 à 9, **caractérisée en ce que** le piston de soupape (6) guidé en déplacement dans le boîtier de soupape (2), est guidé de manière protégée contre toute rotation à l'aide d'une sécurité anti-rotation (18).

11. Soupape d'inversion sanitaire selon la revendication 10, **caractérisée en ce que** la sécurité anti-rotation présente au moins une rainure de sécurité ou un ressort de sécurité (19) disposé(e) sur la périphérie du piston de soupape (6) et qui coopère avec un ressort de sécurité ou une rainure de sécurité (20) associé(e) sur la périphérie intérieure du boîtier de soupape (2) délimitant le mouvement de poussée.

12. Soupape d'inversion sanitaire selon une des revendications 1 à 11, **caractérisée en ce que** le piston de soupape (6) est maintenu de manière étanche sur sa zone d'extrémité frontale opposée au fond de piston (10) vis-à-vis de la périphérie intérieure du boîtier de soupape (2) délimitant le piston de soupape (6) le long de son mouvement de poussée à l'aide d'une membrane roulante (21) ou d'un joint de membrane qui est maintenu(e) de manière étanche d'une part sur la périphérie du piston et d'autre part sur la périphérie intérieure de boîtier.

13. Module sanitaire comprenant une soupape d'inversion selon une des revendications 1 à 12, dont le boîtier de soupape (2) est inséré dans une boîtier d'insertion (24), lequel boîtier d'insertion (24) est disposé d'une part dans un boîtier d'accouplement, lequel boîtier d'accouplement (22) présente une section de boîtier (23) en forme de fourreau pour loger le boîtier d'insertion (24), sur lequel il est prévu latéralement un raccord de conduite (25) pour la seconde trajectoire d'écoulement, dans lequel une extrémité frontale de la section de boîtier (23) en forme de fourreau forme une entrée de boîtier pour le boîtier d'accouplement (22) et l'autre extrémité frontale forme sa sortie de boîtier.

14. Module sanitaire selon la revendication 13, **caractérisé en ce que** le boîtier d'insertion (24) peut être poussé à partir de la face d'extrémité frontale côté entrée du boîtier d'accouplement (22) dans celui-ci jusque dans une butée d'insertion (26).

15. Module sanitaire selon la revendication 13 ou 14, **caractérisé en ce que** le boîtier d'insertion (24) présente un logement de boîtier (27) pour le boîtier de soupape (2) et **en ce que** ce logement de boîtier (27) du boîtier d'insertion (24) présente une ouverture d'insertion qui est prévue sur la périphérie du boîtier d'insertion (24).
